(19) Europäisches Patentamt
European Patent Office
Office européen des brevets

(11) EP 4 737 497 A1

(12) EUROPÄISCHE PATENTANMELDUNG

(43) Veröffentlichungstag:
**06.05.2026 Patentblatt 2026/19**

(21) Anmeldenummer: **24210192.1**

(22) Anmeldetag: **31.10.2024**

(51) Internationale Patentklassifikation (IPC):
***C08G 18/08*** (2006.01) ***C08G 18/22*** (2006.01)
***C08G 18/28*** (2006.01) ***C08G 18/32*** (2006.01)
***C08G 18/73*** (2006.01)

(52) Gemeinsame Patentklassifikation (CPC):
**C08G 18/0852; C08G 18/222; C08G 18/2825; C08G 18/3206; C08G 18/73**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Covestro Deutschland AG**
**51373 Leverkusen (DE)**

(72) Erfinder:
- **Hocke, Heiko**
**51375 Leverkusen (DE)**
- **Muenchrath, Rene**
**51061 Köln (DE)**
- **Peerenboom, Simon**
**47495 Rheinberg (DE)**

(74) Vertreter: **Levpat**
**c/o Covestro AG**
**Gebäude K12**
**51365 Leverkusen (DE)**

# (54) VERFAHREN ZUR HERSTELLUNG EINES THERMOPLASTISCHEN POLYURETHAN-PULVERS MITTELS FÄLLUNGSPOLYMERISATION UNTER EINSATZ SPEZIELLER KATALYSATOREN

(57) Die Erfindung betrifft ein Verfahren zur Herstellung eines thermoplastischen Polyurethan-Pulvers mittels Fällungspolymerisation, umfassend die Schritte:
i. Bereitstellung
A) eines Lösungsmittels;
B) wenigstens eines Polyols mit einer Molmasse zwischen 60 g/mol und 250 g/ mol;
C) wenigstens eines Diisocyanats;
D) eines Katalysators, wobei der Katalysator einen Titan-, Zink- oder Zirkonium-Übergangsmetallkomplex oder Mischungen von diesen umfasst oder daraus besteht;
E) optional eines Kettenregulators E1) und/oder eines Additivs E2);

ii. Umsetzung des Polyols B) mit dem Diisocyanat C) in dem Lösungsmittel A) bei einer Temperatur von höchstens 150 °C unter Anwesenheit des Katalysators D), gegebenenfalls des Kettenregulators E1) und/oder des Additivs E2), zu dem thermoplastischen Polyurethan, wobei das thermoplastische Polyurethan als Feststoff in dem Lösungsmittel A) ausfällt und eine Dispersion bildet;
iii. Abtrennung von dem Lösungsmittel A) und optionale Waschung des thermoplastischen Polyurethans mit einem Lösungsmittel; und
iv. Trocknung des thermoplastischen Polyurethans zu dem thermoplastischen Polyurethan-Pulver;
wobei das thermoplastische Polyurethan-Pulver ein Massenmittel der Molmasse Mw von $\geq$ 50000 g/mol; einen Allophanatgehalt von $\leq$ 0,25 mol-%, bezogen auf das gesamte thermoplastische Polyurethan-Pulver; und ein Verhältnis von Zentrifugenmittel der Molmasse Mz zu Massenmittel der Molmasse Mw von $\leq$ 4,0 aufweist, wobei das Massenmittel der Molmasse Mw, der Allophanatgehalt sowie das Zentrifugenmittel der Molmasse Mz jeweils mit den in der Beschreibung dargelegten Methoden bestimmt werden.

EP 4 737 497 A1

## Beschreibung

Die vorliegende Erfindung betrifft ein Verfahren zur Herstellung eines thermoplastischen Polyurethan-Pulvers mittels Fällungspolymerisation, das durch dieses Verfahren erhaltene oder erhältliche thermoplastische Polyurethan-Pulver sowie dessen Verwendung. Darüber hinaus betrifft die Erfindung ein Formteil, erhalten oder erhältlich durch die Verarbeitung des erfindungsgemäßen thermoplastischen Polyurethan-Pulvers. Schließlich betrifft die Erfindung auch die Verwendung des erfindungsgemäßen Katalysators in einem Verfahren zur Herstellung eines thermoplastischen Polyurethan-Pulvers mittels Fällungspolymerisation, bevorzugt in dem erfindungsgemäßen Verfahren.

## Stand der Technik

Die Herstellung von Polymerpulvern ist für die Verwendung in Pulversinterverfahren, als Additiv für strukturierte Oberflächen oder als Schleif- und Schmiermittel in Kosmetikanwendungen und in der Industrie von hohem Interesse. Pulversinterverfahren sind insbesondere Verfahren, bei denen zunächst eine Pulverschicht appliziert wird, die in einem weiteren Schritt zusammengesintert bzw. die Pulverpartikel miteinander verschmolzen werden. Solche Verfahren werden z.B. zur Beschichtung von Metallen, Polymeren, Holz, Fasern und anderen Materialien genutzt, wo die Oberfläche mittels Dipping in Wirbelbett, mittels Spray-Gun oder via einer Dispersion mit Pulver imprägniert und anschließend erhitzt wird. Neben Epoxid- und Polyesterharzen werden dafür auch unterschiedlichste thermoplastische Polymere wie z.B. Polypropylen, Polyamide, PVC, Acrylate und Polyurethane benutzt.

Ein Prozess zur Herstellung von thermoplastischen Polyurethanen ("TPU") wurde bereits 1937 in DE728981C beschrieben. Die TPU, unter denen insbesondere ein HDI-BDO Addukt (HDI = 1,6-Hexamethylendiisocyanat; BDO = 1,4-Butandiol) auf Grund seiner Kombination guter Eigenschaften wie hoher Schmelzpunkt, hoher E-Modul und gute Chemikalienbeständigkeit später unter den Namen Perlon U, Igamid U und Durethan U eine Zeit lang vermarktet wurde (O. Bayer Angew. Chem. 1947, 59, 9, 257-288), werden dabei durch Umsetzung in einem Lösungsmittel (wie z.B. Chlorbenzol und Dioxan) hergestellt. Das Lösemittel wird in der Regel im Vakuum entfernt. In einigen Beispielen fielen die TPU auch als Gel oder Pulver aus. Es hat sich jedoch später gezeigt, dass die erreichten molekularen Kettenlängen zum Teil ungenügend waren, um gute Polymereigenschaften zu erhalten. Höhermolekulare TPU-Pulver auf Basis z.B. BDO-HDI sind so daher nicht zugänglich.

Jedoch werden die meisten Polymere wie Polypropylen, Polyamid oder thermoplastische Polyurethane, die z.B. für Pulverbeschichtungen oder Pulversinterverfahren verwendet werden können, in Form einer Schmelze hergestellt. Das so erhaltene Polymer muss in einem weiteren Prozessschritt, z.B. durch Mahlung, in die Pulverform gebracht werden. Bei der Herstellung von beispielsweise aliphatischen thermoplastischen Polyurethanen in der Schmelze werden die reinen Monomere wie zum Beispiel 1,4-Butandiol (BDO) und 1,6-Hexamethylendiisocyanat (HDI) in einem Kessel zu einem OH-terminierten Prepolymer umgesetzt. Die zweite Stufe der Umsetzung wird dann in einem schweren Mischaggregat (heavy duty mixer) durch Zugabe von HDI (im Unterschuss; Kennzahl KZ ca. 0,98) zu dem Prepolymer zum Endprodukt durchgeführt (B.I.O.S. Final Report No. 1472, ITEM No. 22, pp47-48). Die Nachteile des Prozesses liegen unter anderem in der hohen Reaktionstemperatur und dem langen sowie schlechten Mischprozess, was zu einem Anwachsen unerwünschter Nebenreaktionen führt. Dieser Schmelzeprozess kann auch in abgewandelter Form erfolgen. Dabei werden die Monomere BDO und HDI in einem Loop Reaktor beziehungsweise alternativ in statischen Mischern (Fluitec Reaktoren) zum Prepolymer umgesetzt, welches in einem 2. Reaktionsschritt in einer Reaktivextrusion mit HDI zum finalen Polymer weiterreagiert. Die Nachteile eines relativ hohen Allophanatanteils und das Auftreten von Gelpartikeln können allerdings auch bei einer Begrenzung des Umsatzes (Unterschuß HDI, KZ 0,98) nicht vermieden werden (WO2021122279). Bei den hier als Beispiel beschriebenen Schmelzeprozessen fällt das Polymer in Form eines Granulates nach der Reaktivextrusion an und muss in einem weiteren Prozessschritt noch in die Pulverform überführt werden.

Bei den meisten Polymeren wie Polyamiden (beispielsweise in EP3491066A1 gezeigt), Polypropylen und den ebenfalls häufig genutzten thermoplastischen Polyurethanen (siehe EP3512687B1) wird für die Umarbeitung des Granulates zu einem Pulver die Mahlung, insbesondere die Kryomahlung, verwendet. Bei der Kryomahlung wird das Polymergranulat mit flüssigem Stickstoff stark abgekühlt und anschließend gemahlen. Die gewünschte Korngröße wird durch Siebung aus dem Mahlgut abgetrennt. Der Nachteil von Mahlverfahren generell ist, dass die Partikelform nicht sphärisch, sondern sehr unregelmäßig und kantig ist. Dadurch wird das Fließverhalten negativ beeinflusst und die Siebung des Mahlgutes ist aufwendiger. Zudem ist die Partikelgrößenverteilung bei der Mahlung sehr breit, so dass die Ausbeute klein ist beziehungsweise der Mahl- und Siebvorgang mehrfach wiederholt werden muss. Zudem ist die Kryomahlung auf Grund des Einsatzes von flüssigem Stickstoff zur ausreichenden Kühlung der Polymere ein teures Verfahren.

Ein Sonderfall stellt das Polyamid 12 (beziehungsweise Polyamid 11) dar, welches zunächst als PA 12 Granulat hergestellt und unter Druck in Ethanol bei erhöhter Temperatur aufgelöst und anschließend unter sehr exakt kontrollierten Bedingungen wieder ausgefällt und getrocknet (siehe beispielsweise EP0911142B1) wird. Der Vorteil dieser Methode ist,

dass das Polymerpulver als relativ sphärische Partikel anfällt, die zudem eine Partikelgröße von < 100 μm (rieselfähig) aufweisen und nicht klassiert (gesiebt) werden müssen. Nachteile des Verfahrens sind neben zusätzlichen Arbeitsschritten und Anlagen die damit verbundenen Kosten sowie keine oder nur eine begrenzte Additivierung des Polymers.

Die vorgenannten Verfahren sind auf Grund ihres Aufwandes teuer und/oder ihrer Nachteile für die Herstellung von thermoplastischen Polyurethan-Pulvern mit langen Kettenlängen in Kombination mit geringen Allophanatgehalt nicht geeignet und limitieren daher den Einsatz von thermoplastischen Polyurethan-Pulvern beziehungsweise die darauf angewiesenen Verfahren (Pulversinterprozesse; Füllstoff für Oberflächenstrukturierung) in der Industrie.

Es besteht daher ein Bedarf an einem Verfahren zur Herstellung von thermoplastischen Polyurethan-Pulvern mit hohen Molmassen und geringen Allophanatgehalten.

## Aufgabe der Erfindung

Die Aufgabe der vorliegenden Erfindung bestand demnach in der Bereitstellung eines Verfahrens zur Herstellung von thermoplastischen Polyurethan-Pulvern mit hohen Molmassen und geringen Allophanatgehalten. Im Besonderen sollte das Verfahren zu thermoplastischen Polyurethan-Pulvern mit einem Massenmittel der Molmasse von ≥ 50000 g/mol und einem Allophanatgehalt von ≤ 0,25 mol-%, bezogen auf das gesamte thermoplastische Polyurethan-Pulver, sowie ein Verhältnis von Zentrifugenmittel der Molmasse Mz zu Massenmittel der Molmasse Mw von ≤ 4,0 führen. Des Weiteren sollte das Verfahren möglichst keine stark toxischen Komponenten aufweisen und bestenfalls das durch das Verfahren erhaltene oder erhältliche thermoplastische Polyurethan-Pulver nicht, insbesondere nicht gelb oder gelblich, verfärben. Ferner sollte das Verfahren vorzugsweise einen effizienteren und verfahrenstechischsicheren Reaktionsverlauf aufweisen. Außerdem sollten die thermoplastischen Polyurethan-Pulver durch Weiterverarbeitung zu Formteilen führen, welche weiterhin gute oder verbesserte mechanische Eigenschaften, insbesondere eine gute Bruchdehnung und ein gutes E-Modul, aufweisen.

## Lösung der Aufgabe und detaillierte Beschreibung der Erfindung

Die Aufgabe wurde gelöst durch ein Verfahren zur Herstellung eines thermoplastischen Polyurethan-Pulvers mittels Fällungspolymerisation, umfassend die Schritte:

i. Bereitstellung

- A) eines Lösungsmittels;
- B) wenigstens eines Polyols mit einer Molmasse zwischen 60 g/mol und 250 g/ mol;
- C) wenigstens eines Diisocyanats;
- D) eines Katalysators, wobei der Katalysator einen Titan-, Zink- oder Zirkonium-Übergangsmetallkomplex oder Mischungen von diesen umfasst oder daraus besteht;
- E) optional eines Kettenregulators E1) und/oder eines Additivs E2);

ii. Umsetzung des Polyols B) mit dem Diisocyanat C) in dem Lösungsmittel A) bei einer Temperatur von höchstens 150 °C unter Anwesenheit des Katalysators D), gegebenenfalls des Kettenregulators E1) und/oder des Additivs E2), zu dem thermoplastischen Polyurethan, wobei das thermoplastische Polyurethan als Feststoff in dem Lösungsmittel A) ausfällt und eine Dispersion bildet;

iii. Abtrennung von dem Lösungsmittel A) und optionale Waschung des thermoplastischen Polyurethans mit einem Lösungsmittel; und

iv. Trocknung des thermoplastischen Polyurethans zu dem thermoplastischen Polyurethan-Pulver;

wobei das thermoplastische Polyurethan-Pulver

- ein Massenmittel der Molmasse Mw von ≥ 50000 g/mol;
- einen Allophanatgehalt von ≤ 0,25 mol-%, bezogen auf das gesamte thermoplastische Polyurethan-Pulver; und
- ein Verhältnis von Zentrifugenmittel der Molmasse Mz zu Massenmittel der Molmasse Mw von ≤ 4,0;

aufweist, wobei das Massenmittel der Molmasse Mw, der Allophanatgehalt sowie das Zentrifugenmittel der Molmasse Mz jeweils mit den weiter unten dargelegten Methoden bestimmt werden.

Im Zuge der Entwicklungsarbeiten, die zu der vorliegenden Erfindung geführt haben, wurde überraschenderweise festgestellt, dass die Verwendung eines speziellen Katalysators, der nämlich einen Titan-, Zink- oder Zirkonium-Übergangsmetallkomplex oder Mischungen von diesen umfasst oder daraus besteht, bei einer Fällungspolymerisation zu thermoplastischen Polyurethan-Pulvern mit hohen Molmassen und geringen Allophanatgehalten führt. Außerdem wird

dadurch weiterhin ein Verhältnis von Zentrifugenmittel der Molmasse Mz zu Massenmittel der Molmasse Mw von ≤ 4,0 erzielt. Diese erfindungsgemäßen Katalysatoren haben zudem den Vorteil im Vergleich zu herkömmlich eingesetzten Katalysatoren wie der organische Zinn-basierte Katalysator DBTL (Dibutylzinnlaureat), dass diese nicht stark toxisch sind, was diese umweltverträglicher macht und auch aus gesundheitlicher sowie regulatorischer Sicht zu bevorzugen ist.

Des Weiteren wurde gefunden, dass die Verwendung der erfindungsgemäßen Katalysatoren zu einem effizienteren Reaktionsverlauf der Fällungspolymerisation führt. Der effizientere Reaktionsverlauf zeigt sich darin, dass die Hauptfällung des thermoplastischen Polyurethans deutlich früher erfolgt (Zeitersparnis gleich höherer Durchsatz) und die Isocyanatkonzentration während des Reaktionsverlaufs sowie am Ende der Isocyanat-Zugabe möglichst gering ist. Eine zu hohe Isocyanatkonzentration während des Reaktionsverlaufs sowie am Ende der Isocyanat-Zugabe stellt als latente Energiemenge nämlich ein beachtliches Risiko in der industriellen Produktion im Falle einer Störung, z.B. eine Störung der Kühlung, dar.

Das Zahlenmittel der Molmasse (Mn), das Massenmittel der Molmasse (Mw) sowie das Zentrifugenmittel (Mz) des thermoplastischen Polyurethan-Pulvers wird mittels Gelpermeationschromatographie (GPC) bestimmt. Dazu wird die zu vermessende Probe in einer Lösung von 3 g Kaliumtrifluoracetat in 400 Kubikzentimeter Hexafluorisopropanol aufgelöst (Konzentration der Probe ca. 2 mg/Kubikzentimeter). Die jeweiligen GPCs wird mit folgenden Komponenten bei einer Flussrate von 1 Kubikzentimeter/Minute gemessen:

Pumpe: HPLC-Pumpe 515 (Waters GmbH)
Detektor: Smartline RI-Detektor 2300 (Knauer Wissenschaftliche Geräte GmbH)
Säulen: 1 Vorsäule, 1000 Ä PSS PFG 7μm, 300 Ä PSS PFG 7μm, 100 Ä PSS PFG 7μm in dieser Reihenfolge (PSS Polymer Standards Service GmbH)
Entgasung: Degasser PSS (PSS Polymer Standards Service GmbH)
Injektionsvolumen: 100 Mikroliter
Temperatur: 23 °C - 25 °C
Molmassen-Standard: Polymethylmethacrylat-Standard-Kit (PSS Polymer Standards Service GmbH)

Das Zahlenmittel der Molmasse (Mn bzw. $\overline{M}_n$) wird aus den durch die Messung der Gelpermeationschromatographie erhaltenen Daten mit Hilfe der folgenden Gleichung errechnet:

$$\overline{M}_n = \frac{\sum_i n_i M_i}{\sum_i n_i}$$

in g/mol wobei:

$M_i$ die molare Masse der Polymere der Fraktion *i* ist, so dass $M_i < M_{i+1}$ für alle *i,* in g/mol ist,
$n_i$ die Stoffmenge des Polymers der Fraktion *i,* in mol ist.

Das Massenmittel der Molmasse (Mw bzw. $\overline{M}_w$) wird ebenfalls aus den durch die Messung der Gelpermeationschromatographie erhaltenen Daten mit Hilfe der folgenden Gleichung errechnet:

$$\overline{M}_w = \frac{\sum_i n_i M_i^2}{\sum_i n_i M_i}$$

in g/mol wobei:

$M_i$ die molare Masse der Polymere der Fraktion *i* ist, so dass $M_i < M_{i+1}$ für alle *i,* in g/mol ist,
$n_i$ die Stoffmenge des Polymers der Fraktion *i,* in mol ist.

Das Zentrifugenmittel der Molmasse (Mz bzw. $\overline{M}_z$) wird aus den durch die Messung der Gelpermeationschromatographie erhaltenen Daten mit Hilfe der folgenden Gleichung errechnet:

$$\overline{M}_z = \frac{\sum_i n_i M_i^3}{\sum_i n_i M_i^2}$$

in g/mol wobei:

$M_i$ die molare Masse der Polymere der Fraktion *i* ist, so dass $M_i < M_{i+1}$ für alle *i,* in g/mol ist,

$n_i$ die Stoffmenge des Polymers der Fraktion *i,* in mol ist.

Der Allophanatgehalt des thermoplastischen Polyurethanpulvers wird mittels $^1$H-NMR bestimmt. Die Messung wird mit einem Bruker AV III HD 600 Spektrometer bei 600 MHz in DMSO-D6 bei 80 °C durchgeführt. Folgende Peaks werden dabei ausgewertet:

| | | | |
|---|---|---|---|
| U= | C**$H_2$**-NH | 2.98 ppm | $CH_2$ bei Urethan |
| O= | C**$H_2$**-OH | 3.43 ppm | $CH_2$ bei OH-Gruppen |
| N= | N-**H** | 6.6 ppm | Urethan |
| A= | N-**H** | 8.3-8.4 ppm | Allophanat |

Die Allophanat Konzentration beziehungsweise der Allophanatgehalt in mol-% wird dabei nach folgender Formel berechnet:

$$\text{Allophanat [mol-\%]} = 100\ \% * A/\ (A+N)$$

Die Kennzahl für den Umsatz ergibt sich aus der Formel:

$$KZ = 1/\ (1+O/U)$$

Das Lösungmittel A) kann entweder ein Lösungsmittelgemisch oder ein einzelnes Lösungsmittel sein.

Wenn das Lösungsmittelgemisch A) ein Lösungsmittelgemisch ist, umfasst das Lösungsmittelgemisch bevorzugt mindestens ein erstes aprotisches Lösungsmittel A1) mit einer relativen Permittivität $\varepsilon_r$ von 2 bis 20 und mindestens ein zweites aprotisch polares Lösungsmittel A2) mit einer relativen Permittivität $\varepsilon_r$ von wenigstens 24, wobei die relative Permittivität $\varepsilon_r$ jeweils bei 20 °C und 100 kHz gemessen wird. Dabei ist es bevorzugt, dass das erste aprotische Lösungsmittel A1) halogenierte Aromaten, Aromaten, Ketone, Ether, Ester und Carbonate oder Mischungen davon, insbesondere Chlorbenzol und/oder ortho-Dichlorbenzol; Cyclopentanon; Cyclohexanon; Heptan-4-on; Amylacetat; Methoxypropylacetat; Xylol; Benzol; Toluol; Ethylbenzol; Cumol; Acetophenon oder Mischungen davon, weiter bevorzugt Chlorbenzol und/oder das zweite aprotisch polare Lösungsmittel A2) Dimethylsulfoxid, Dimethylformamid, N-Methyl-2-pyrrolidon, Tetramethylharnstoff (TMU), 1,3-Dimethyl-3,4,5,6-tetrahydro-2(1H)-pyrimidinion, 1,3-Dimethyl-2-imidazolidinon, X-Ethyl-2-pyrrolidon, Benzonitril, Dimethylacetamid; 1,2-Propylencarbonat; Ethylencarbonat; Gamma-Butyrolacton oder Mischungen davon, bevorzugt Dimethylsulfoxid; 1,2-Propylencarbonat; Ethylencarbonat; Gamma-Butyrolacton umfasst oder daraus besteht.

Das Verhältnis von dem ersten aprotischen Lösungsmittel A1) zu dem zweiten aprotisch polaren Lösungsmittel A2) beträgt bevorzugt 300:1 bis 1:9, weiter bevorzugt 200:1 bis 1:1, noch weiter bevorzugt 100:1 bis 8:2.

Wenn das Lösungsmittel A) ein einzelnes Lösungsmittel ist, ist es bevorzugt, dass das Lösungsmittel A) Chlorbenzol, ortho-Dichlorbenzol; Xylol; Ethylbenzol; Toluol; Cumol; Butylacetat oder Amylacetat umfasst oder daraus besteht, weiter bevorzugt Chlorbenzol.

Ferner ist es bevorzugt, dass das Polyol B) Ethylenglykol, 1,3-Propandiol, 1,4-Butandiol, 1,5-Pentandiol, Neopentylglykol, 1,6-Hexandiol, 1,8-Octandiol, 1,10-Decandiol, 1,12-Dodecandiol oder Mischungen davon umfasst oder daraus besteht, wobei das Polyol B) vorzugsweise mindestens 50,0 Gew.-% 1,4-Butandiol, besonders bevorzugt mindestens 90,0 Gew.-% 1,4-Butandiol enthält, bezogen auf das Gesamtgewicht des Polyols B).

Das Diisocyanat umfasst bevorzugt oder besteht bevorzugt aus 1,4-Butandiisocyanat, 1,5-Pentandiisocyanat, 1,6-Hexandiisocyanat, Isophorondiisocyanat, 1,1'-Methylenbis(4-isocyanatocyclohexan), Xylylene-Diisocyanat, insbesondere m-Xylylene-Diisocyanat oder Mischungen von diesen, wobei das Diisocyanat C) weiter bevorzugt mindestens 50,0 Gew.-% 1,5-Pentandiisocyanat oder 1,6-Hexandiisocyanat enthält, bezogen auf das Gesamtgewicht des Diisocyanats C).

Der Katalysator umfasst oder besteht aus einem Titan-, Zink- oder Zirkonium-Übergangsmetallkomplex oder Mischungen von diesen. Es ist bevorzugt, dass der Titan-, Zink- und / oder Zirkonium-Übergangsmetallkomplex mindestens einen mehrzähnigen Liganden, insbesondere zumindest der Zirkonium-Übergangsmetallkomplex mindestens einen mehrzähnigen Liganden, aufweist, wobei der mehrzähnige Ligand weiter bevorzugt mindestens ein zweizähniger Ligand, noch weiter bevorzugt Acetylaceton, ist. Es ist besonders bevorzugt, dass der Katalysator D) aus der Gruppe ausgewählt ist, umfassend oder bestehend aus Tetraisopropylorthotitanat, Bis(acetylacetonato)-titan-(IV)-oxid, Bis(acetylacetonato)-titan-diisopropoxid, Zink-(II)-acetat, Zink-(II)-acetylacetonat, Zirkonium-(IV)-acetylacetonat oder Mischungen von diesen, bevorzugt Bis(acetylacetonato)-titan-(IV)-oxid, Bis(acetylacetonato)-titan-diisopropoxid, Zink-(II)-acetat,

Zink-(II)-acetylacetonat oder Mischungen von diesen, besonders bevorzugt Bis(acetylacetonato)-titan-diisopropoxid. Der Katalysator Bis(acetylacetonato)-titan-diisopropoxid hat den Vorteil, dass dieser zu einer Erhöhung der Molmasse mit gleichzeitig niedrigen Allophanatgehalt der thermoplastischen Polyurethan-Pulver führt und dies mit einer geringen bzw. keiner erkennbaren Verfärbung des Pulvers kombiniert. Zudem ist dieser Katalysator im Vergleich zu herkömmlichen Katalysatoren wie DBTL auch umweltverträglicher und gesundheitlich weniger bedenklich. Aus diesem Grund ist es besonders bevorzugt, dass der Katalysator D) Bis(acetylacetonato)-titan-diisopropoxid umfasst oder daraus besteht.

Der optionale Kettenregulator E1) kann beispielsweise aus der Gruppe, umfassend oder bestehend aus monofunktionalen Zerewitinow H-aciden Verbindungen, monofunktionalen Isocyanaten oder Mischungen davon ausgewählt sein. Als Beispiele für den optionalen Kettenregulator E1) sind unter anderem n-Octanol, Benzylalkohol, n-Oktylamin, Dioktylamin, □-Caprolactam, Propanonoxim, Butan-1-thiol, Acetylaceton und Malonsäurediethylester zu nennen.

Das optionale Additiv E2) kann zum Beispiel aus der Gruppe ausgewählt sein, umfassend oder bestehend aus Stabilisatoren, Farbstoffen und Markern oder Mischungen davon.

Unter Farbstoffen werden hier organische Verbindungen verstanden, die mindestens Teile des sichtbaren Lichtes zwischen 380 nm und 790 nm absorbieren. Besonders bevorzugt sind Farbstoffe, die unter den in Schritt ii. genannten Reaktionsbedingungen gelöst vorliegen und mit einer Zerewitinow H-aciden Verbindung oder mit einer Isocyanatgruppe reagieren und so kovalent mit dem thermoplastischen Polyurethan verbunden sind.

Unter Markern werden hier Verbindungen verstanden, die mit Hilfe von analytischen Verfahren einfach zu detektieren und spezifisch sind. Dies können zum Beispiel aromatische Verbindungen sein, welche eine spezifische UV-Absorption oder UV-Absorptionsmuster aufweisen, oder mittels Fluoreszenzspektroskopie nachgewiesen werden können. Weitere Beispiele für Marker sind Isotopen-angereicherte Verbindungen, die sich gut mittels NMR-Spektroskopie oder durch ihre radioaktive Strahlung nachweisen lassen. Besonders bevorzugt sind Marker, die unter den in Schritt ii. genannten Reaktionsbedingungen gelöst vorliegen und mit einer Zerewitinow H-aciden Verbindung oder mit einer Isocyanatgruppe reagieren und so kovalent mit dem thermoplastischen Polyurethan verbunden sind.

Des Weiteren ist es bevorzugt, dass

- 30,0 bis 95,0 Gewichtsteile, bevorzugt 60,0 bis 90,0 Gewichtsteile des Lösungsmittels A);
- 2,0 bis 40,0 Gewichtsteile, bevorzugt 3,0 bis 20,0 Gewichtsteile des Polyols B);
- 3,0 bis 40,0 Gewichtsteile, bevorzugt 5,0 bis 25,0 Gewichtsteile des Diisocyanats C);
- 0,00001 bis 5,0 Gewichtsteile, bevorzugt 0,0001 bis 0,1 Gewichtsteile des Katalysators D);
- 0 bis 10,0 Gewichtsteile, bevorzugt 0,001 bis 1,5 Gewichtsteile des Kettenregulators E1); und/oder
- 0 bis 20,0 Gewichtsteile, bevorzugt 0,0001 bis 3,0 Gewichtsteile des Additivs E2);

bereitgestellt werden, jeweils bezogen auf die Gesamtmenge von Lösungsmittel A), Polyol B), Diisocyanat C), Katalysator D), Kettenregulator E1) und Additiv E2), welche auf 100 Gewichtsteile normiert ist.

Die Umsetzung in Schritt ii. erfolgt vorzugsweise bei einer Temperatur von 50 °C bis 150 °C, weiter bevorzugt von 100 °C bis 145 °C, noch weiter bevorzugt von 120 °C bis 140 °C und/oder bei einer Isocyanat-Kennzahl von 0,95 bis 1,1, weiter bevorzugt 0,97 bis 1,02, noch weiter bevorzugt 0,98 bis 1,0. Die in dem Schritt ii. gebildete Dispersion weist vorzugsweise einen Feststoffgehalt von 5,0 bis 50,0 Gew.-% auf, weiter bevorzugt von 15,0 bis 45,0 Gew.-%, noch weiter bevorzugt von 20,0 bis 40,0 Gew.-%, bestimmt mittels gravimetrischer Messung mit und ohne Lösungsmittel.

Die Isocyanat-Kennzahl errechnet sich aus der Molmenge der reaktiven Isocyanatgruppen geteilt durch die Molmenge der reaktiven Zerewitinow H-aciden Gruppen.

$$KZ = n_{Iso} / n_{H\text{-}acid}$$

Die Umsetzung in Schritt ii. kann auch bei einem niedrigeren oder höheren Druck als der umgebende Atmosphärendruck im Autoklaven erfolgen, zum Beispiel wenn Lösungsmittel A1 und/ oder Lösungsmittel A2 einen niedrigeren Siedepunkt als die Reaktionstemperatur bei ca. 1 bar aufweisen. Bevorzugt ist die Durchführung der Umsetzung in Schritt ii. bei Umgebungsdruck.

Darüber hinaus ist bevorzugt, dass die Abtrennung in Schritt iii. mittels Filtration, Zentrifugation und/oder Abdampfen der Lösungsmittel erfolgt. Das thermoplastische Polyurethan kann in Schritt iii. auch noch zusätzlich mit einem Lösungsmittel gewaschen werden (optionale Waschung). Vorzugsweise umfasst oder besteht dieses Lösungsmittel aus einem Lösungsmittel mit einem Siedepunkt zwischen -30 °C und +250 °C (bei 1 bar), bevorzugt halogenierte Aromaten, Aromaten und Alkane, Ketone, Ether, Ester, Alkohole, Nitrile, Wasser und Carbonate oder Mischungen davon, insbesondere Chlorbenzol, Methylethylketon, Aceton, einem C1-C6-Alkohol und deren Ester, Dimethylcarbonat, Diethylcarbonat oder Mischungen davon, besonders bevorzugt Chlorbenzol.

Die Trocknung in Schritt iv. erfolgt ferner vorzugsweise mit Bewegung beziehungsweise Durchmischung des Trockenmaterials, besonders bevorzugt in einem Schaufeltrockner.

Es ist außerdem bevorzugt, dass das thermoplastische Polyurethan-Pulver

- ein Massenmittel der Molmasse Mw von 55000 bis 400000 g/mol, weiter bevorzugt von 60000 bis 300000 g/mol, noch weiter bevorzugt von 65000 bis 200000 g/mol, besonders bevorzugt 70000 bis 175000 g/mol, ganz besonders bevorzugt 750000 bis 150000 g/mol;
- einen Allophanatgehalt von 0 bis 0,20 mol-%, weiter bevorzugt von 0,001 bis 0,15 mol-%, besonders bevorzugt von 0,01 bis 0,10 mol-%, bezogen auf das gesamte thermoplastischen Polyurethan-Pulver; und/oder
- ein Verhältnis von Zentrifugenmittel der Molmasse Mz zu Massenmittel der Molmasse Mw von $\leq$ 3,0, weiter bevorzugt von 1,5 bis 2,2

aufweist.

Je nach Auswahl des Pulversinterverfahrens und Anwendungsspezifikationen für das Polyurethan-Pulver kommen Pulver mit verschiedenen Korngrößen zur Anwendung, jedoch bewegen sich die Korngrößen meist in einem Bereich bis zu 0,500 mm und kleiner.

Ein weiterer wichtiger Aspekt der Korngröße ist die Bildung einer möglichst stabilen Dispersion während der Reaktion und zur Verarbeitung derselben. Nach der Überführung in den industriellen Maßstab muss die Dispersion mittels Pumpen transportiert werden, darf nicht vorzeitig sedimentieren und sollte zudem gute Filtrationseigenschaften aufweisen. Bei zu großer Korngröße sedimentieren die Partikel zu schnell, es kommt zu Ablagerungen und erhöhtem Verschleiß an den Pumpen.

Es ist daher bevorzugt, dass das thermoplastische Polyurethan-Pulver $\geq$ 25,0 Gew.-% einer Partikelfraktion von < 0,500 mm, bezogen auf das gesamte thermoplastische Polyurethan-Pulver aufweist, weiter bevorzugt von 30,0 bis 100 Gew.-%, weiter bevorzugt von 40,0 bis 80,0 Gew.-%. Für die Bestimmung der Partikelfraktion wird ca. 100 g Probenmenge 5 min mit einer Haver & Boecker Laborsiebmaschine Nr. 7279 (Bj. 1978) und dem entsprechenden Siebsatz (z.B. 0,100 mm, 0,250 mm, 0,500 mm) gesiebt und die einzelnen Fraktionen danach gewogen.

Das thermoplastische Polyurethan nach Schritt iii. und/oder das thermoplastische Polyurethan-Pulver nach Schritt iv. kann/können ferner mit einem Stabilisator aus einer Stabilisatorlösung imprägniert werden. Dafür wird vorzugsweise das thermoplastische Polyurethan nach Schritt iii. und/oder das thermoplastische Polyurethan-Pulver nach Schritt iv. in der Stabilisatorlösung dispergiert und anschließend abgetrennt sowie getrocknet. Die Stabilisatorlösung umfasst vorzugsweise oder besteht vorzugsweise aus

- einem Lösungsmittel, welches aus der Gruppe ausgewählt ist, umfassend oder bestehend aus Lösungsmitteln der Gruppe chlorierte Aromaten; Aromaten; Aliphaten; Ester; Ether; Alkohole; Wasser; Ketone; Nitrile; Carbonate; oder Mischungen davon, oder bevorzugt dem/den Lösungsmittel(n) A1) aus Schritt i., wobei das/die Lösungsmittel vorzugsweise einen Siedepunkt von < 250 °C bei 1 bar aufweisen; und
- einem darin gelösten Stabilisator, welcher aus der Gruppe ausgewählt ist, umfassend oder bestehend aus sterisch gehinderte Phenol-Derivate, organische Phosphin-, Phosphit- und/ oder Phosphonat-Derivate (allgemein auch Phosphor-basierte Stabilisatoren genannt), schwefelhaltige Antioxidantien, 2,2,6,6-Tetramethylpiperidin-Derivate, Benzotriazol-Derivate, Triazin-Derivate, Hydroxybenzophenon-Derivate, Cyanoacrylat-Derivate, Oxalinid-Derivate oder Mischungen davon;

wobei der Gewichtsanteil des Stabilisators bevorzugt von 0,001 bis 10,0 Gew.-%, weiter bevorzugt von 0,05 bis 5,0 Gew.-% beträgt, bezogen auf das Gesamtgewicht der Stabilisatorlösung.

Bevorzugt enthält die Stabilisatorlösung als Phosphor-basierte Stabilisatoren Phosphor(III) Verbindungen, die in der Wärme bei Anwesenheit von Sauerstoff zu Phosphor (V) Verbindungen oxidiert werden. Weiter bevorzugt werden organische Phosphite, Phosphin-Verbindungen und Phosphonate, insbesondere organische Phosphite und Phosphonate, eingesetzt.

Besonders bevorzugt ist der Phosphor-basierte Stabilisator ausgewählt aus mindestens einer Verbindung gemäß den Strukturen (1), (2), (3), (4), (5) und (6).

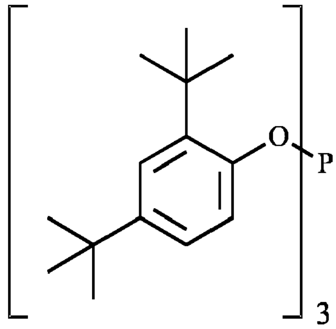

(1)

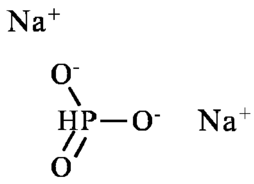

(2)

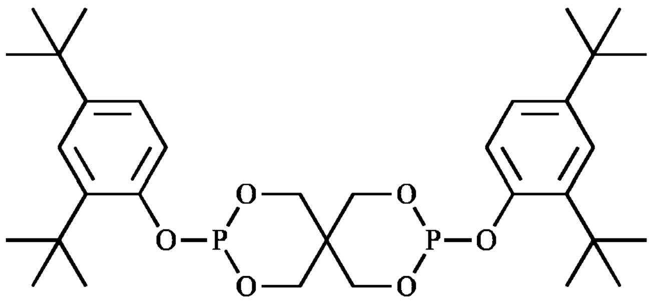

(3)

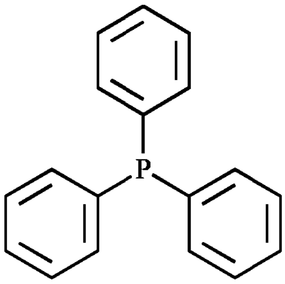

(4)

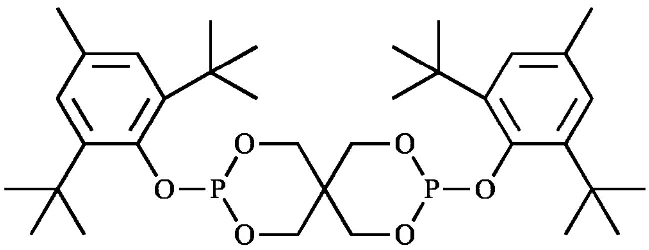

(5)

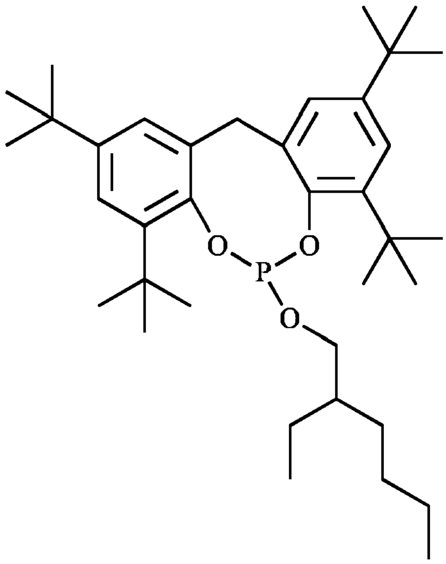

(6)

Die Verbindung (1) ist als CAS: 31570-04-4 klassifiziert und kommerziell unter dem Namen Irgafos™ 168 der Firma BASF (Deutschland) verfügbar.

Die Verbindung (2) ist als CAS: 237-249-1 klassifiziert und kommerziell unter dem Namen Brüggolen™ H10 der Firma Brüggeman (Deutschland) verfügbar.

Die Verbindung (3) ist als CAS: 26741-53-7 klassifiziert und kommerziell unter dem Namen Irgafos™ 126 der Firma BASF (Deutschland) verfügbar.

Die Verbindung (4) ist als CAS: 603-35-0 klassifiziert und kommerziell unter dem Namen Triphenylphosphin der Firma BASF (Deutschland) verfügbar.

Die Verbindung (5) ist als CAS: 80693-00-1 klassifiziert und kommerziell unter dem Namen ADK Stab™ PEP 36 der Firma Adeka (Japan) verfügbar.

Die Verbindung (6) ist als CAS: 126050-54-2 klassifiziert und kommerziell unter dem Namen ADK Stab™ HP-10 der Firma Adeka (Japan) verfügbar.

Ein weiterer geeigneter Phosphor(III) enthaltener Stabilisator ist AddWorks™ LXR 568 MP der Firma Clariant (Schweiz).

Es ist bevorzugt, dass der Phosphor-basierte Stabilisator aus der Gruppe ausgewählt ist, umfassend oder bestehend aus Verbindungen gemäß den Strukturen (1), (2), (4), (6) oder Mischungen von diesen. Besonders bevorzugt wird als Phosphor-basierter Stabilisator die Verbindung gemäß Struktur (1) und/oder (2) eingesetzt. Durch diese Phosphor-basierten Stabilisatoren wird eine besonders hohe Zugfestigkeit des hergestellten Formkörpers erreicht.

Die Stabilisatorlösung kann außerdem ein sterisch gehindertes Phenol enthalten. Auch Mischungen mehrerer solcher Komponenten und verschiedener Stabilisatoren können eingesetzt werden.

Bevorzugt handelt es sich bei dem sterisch gehinderten Phenol um eine Verbindung der allgemeinen Struktur (7a) oder (7b)

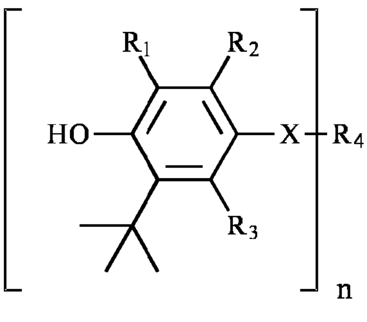

(7a)

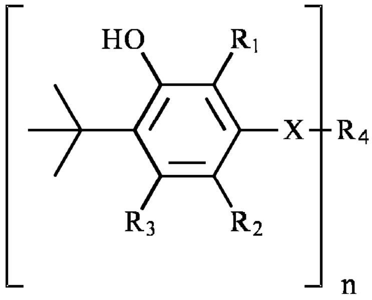

(7b)

wobei n 1, 2, 3 oder 4 bedeutet,

$R_1$, $R_2$ und $R_3$ jeweils unabhängig voneinander für $C_1$- bis $C_4$-Alkyl oder Wasserstoff stehen
X für eine direkte Bindung oder einen organischen Rest mit $C_1$- bis $C_{60}$- steht und der organische Rest Sauerstoff und/oder Stickstoff enthalten kann.
$R_4$ für eine direkte Bindung, Kohlenstoff, Ci-Cs Alkyl, Aryl oder eine Struktur gemäß Formel (8a) (8b) oder (8c) steht.

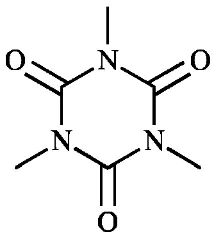

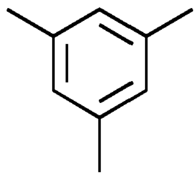

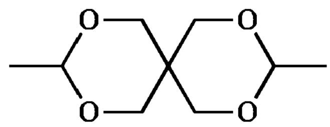

(8a) (8b) (8c)

Besonders bevorzugt ist das sterisch gehinderte Phenol ausgewählt aus mindestens einer Verbindung gemäß den Strukturen (9), (10), (11) und (12).

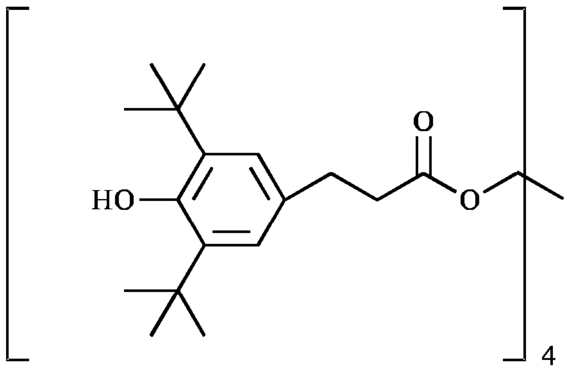

(9)

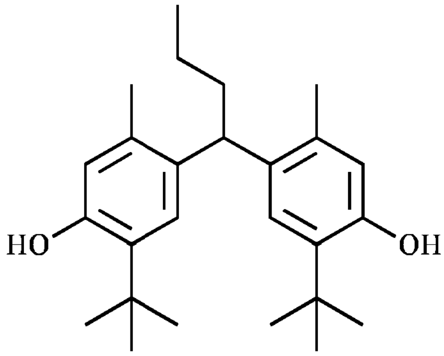

(10)

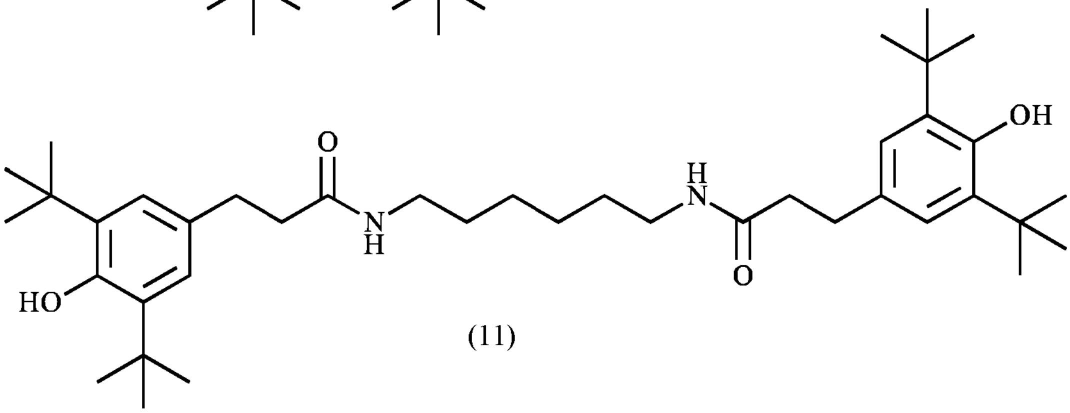

(11)

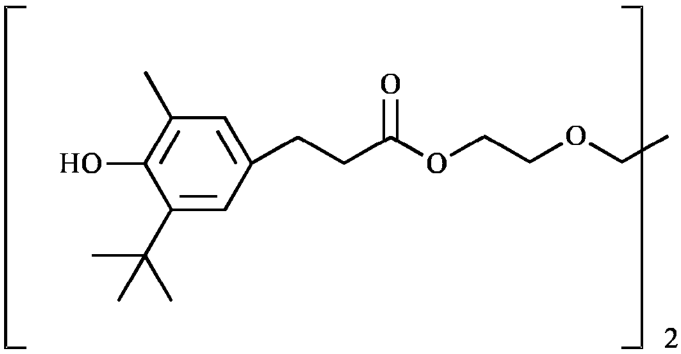

(12)

Die Verbindung (9) ist als CAS: 6683-19-8 klassifiziert und kommerziell unter dem Namen ADK Stab™ AO-60 der Firma Adeka (Japan) verfügbar.

Die Verbindung (10) ist als CAS: 85-60-9 klassifiziert und kommerziell unter dem Namen Songnox™ 4425 der Firma Songwon Industrial Group (Südkorea) verfügbar.

Die Verbindung (11) ist als CAS: 23128-74 klassifiziert und kommerziell unter dem Namen Songnox™ 1098 der Firma Songwon Industrial Group (Südkorea) verfügbar.

Die Verbindung (12) ist als CAS: 36443-68-2 klassifiziert und kommerziell unter dem Namen Irganox™ 245 der Firma BASF (Deutschland) verfügbar.

Weiterhin kann die Stabilisatorlösung optional ein schwefelhaltiges Antioxidanz enthalten. Auch Mischungen mehrerer solcher Komponenten können eingesetzt werden.

Ein schwefelhaltiges Antioxidanz kann beispielsweise eine Struktur gemäß $R_1$-$CH_2$-$(S)_x$-$CH_2$-$R_2$, aufweisen, wobei x = 1 oder 2 ist und wo $R_1$ und $R_2$ gleich oder verschieden sein können und aromatische oder aliphatische Gruppen darstellen. Bevorzugt handelt es sich bei $R_1$ und $R_2$ um aliphatische Gruppen, die linear oder verzweigt sein können und funktionelle Gruppen enthalten können.

Beispiele von kommerziell verfügbaren schwefelhaltigen Antioxidanzien sind Dilauryl-3,3'-thiodipropionat (CAS 123-28-4), Distearyl-3,3'-thiodipropionat (CAS 693-36-7), Ditridecylthiodipropionat (CAS 10595-72-9); Pentaerythritoltetrakis ([β-laurylthiopropionat (CAS 29598-76-3), 2,2'-Thiodiethylenbis[3-(3,5-di-t-butyl-4-hydroxyphenyl)propionat] (CAS 41484-35-9), Dimyristylthiodipropionat (CAS 16545-54-3) und Distearyldisulfid (CAS 2500-88-1) sowie Mischungen aus diesen Substanzen.

Alternativ kann das schwefelhaltiges Antioxidanz auch einen oder mehrere Diphenylthioester umfassen wie beispielsweise 4,4'-Thiobis(2-t-butyl-5-methlylphenol) (CAS 96-69-5) und 2,2'-Thiobis(6-t-butyl-4-methylphenol) (CAS

90-66-4).

Besonders bevorzugt als schwefelhaltiges Antioxidanz ist Pentaerythritoltetrakis ([β-laurylthiopropionat] (CAS 29598-76-3) (Struktur (13)).

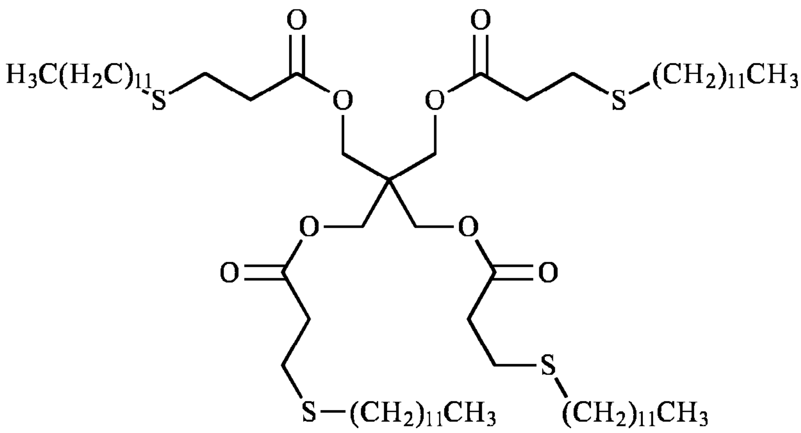

(13)

Ferner ist es bevorzugt, dass das thermoplastische Polyurethan-Pulver nach der vorgenannten Imprägnierung 0,005 bis 2,0 Gew.-% des Stabilisators aus der Stabilisatorlösung aufweist, bezogen auf das Gesamtgewicht des thermoplastischen Polyurethan-Pulvers. Das nach der Imprägnierung erhaltene thermoplastische Polyurethan-Pulver weist bevorzugt einen b-Wert von ≤ 4,0, weiter bevorzugt von 0,1 bis 2,5 auf, bestimmt im CIE-Lab Farbraum mittels einem Spektralphotometer mit der Lichtart D 65 bei 8° gemäß DIN EN ISO 11664-4. Ferner ist es bevorzugt, dass das thermoplastische Polyurethan-Pulver eine Änderung des b-Werts (Δb) nach einer Temperatureinwirkung von 120 °C für eine Dauer von 96 h und/oder von 155 °C für eine Dauer von 6 h jeweils unter Luftatmosphäre von ≤ 3,5, bevorzugt von 0,1 bis 2,8, weiter bevorzugt von 0,2 bis 2,0 aufweist, wobei der b-Wert im CIE-Lab Farbraum mittels einem Spektralphotometer mit der Lichtart D 65 bei 8° gemäß DIN EN ISO 11664-4 bestimmt wird und sich die Änderung des b-Werts durch Subtraktion des b-Werts vor der Temperatureinwirkung von dem b-Wert nach der Temperatureinwirkung ergibt. Es wurde nämlich überraschenderweise gefunden, dass durch die vorgenannte erfindungsgemäße Imprägnierung eine Vergilbung des thermoplastischen Polyurethan-Pulvers, auch nach einer Temperatureinwirkung, verringert wird, welche ansonsten bei durch Lösungsmittelverfahren hergestellten thermoplastischen Polyurethan-Pulvern, insbesondere aliphatischen thermoplastischen Polyurethan-Pulvern, auf Grund des Trocknungsschrittes sehr ausgeprägt sein kann (German Plastics Practice, 1946, p 304). Der b-Wert im CIE-Lab Farbraum, wie vorstehend dargelegt, wird im Rahmen der Erfindung als ein Maß für die Vergilbung beziehungsweise den "Weißeindruck" des Polyurethan-Pulvers verwendet. Der CIE-Lab-Farbraum setzt sich aus dem L-, dem a- und dem vorgenannten b-Wert zusammen. Dabei definiert "L" die Helligkeit, "a" den Rot/Grün-Wert und "b" den Gelb/Blau-Wert. Zur Bestimmung des b-Werts wird eine Farbmessung von der jeweiligen Probe (ca 3 mm Pulverschicht zwischen 2 Deckgläsern für Mikroskopie) mithilfe eines portablen Spektralphotometers (CM5 der Firma Konica Minolta) mit der Lichtart D 65 bei 8° (Beobachter) sowie einer diffusen Beleuchtung gemäß DIN EN ISO 11664-4 durchgeführt. Die Farbe des Pulvers wird dabei in Reflexion gemessen und im CIE-Lab-Farbraum mit den L-, a- und b-Werten angegeben. Der b-Wert wird aus der gemessenen spektralen Reflexionskurve mit Hilfe der Gerätesoftware berechnet.

Ferner betrifft die Erfindung ein thermoplastisches Polyurethan-Pulver, erhalten oder erhältlich nach dem erfindungsgemäßen Verfahren. Wie bereits weiter oben dargelegt wurde, weisen diese thermoplastischen Polyurethan-Pulver eine hohes Massenmittel der Molmassen in Kombination mit einem geringen Allophanatgehalt auf. Sind diese noch zusätzlich erfindungsgemäß imprägniert worden, zeigen diese zudem eine geringere Vergilbung nach Temperatureinwirkung.

Außerdem betrifft die Erfindung die Verwendung des erfindungsgemäßen thermoplastischen Polyurethan-Pulvers in einem Extrusionsverfahren, Spritzgussverfahren, Pulversinterverfahren, Lösungsmittel- und/oder Schmelzeverfahren, insbesondere zur Herstellung von Formteilen und/oder Beschichtungen.

Darüber hinaus betrifft die Erfindung ein Formteil, erhalten oder erhältlich durch die Verarbeitung des erfindungsgemäßen thermoplastischen Polyurethan-Pulvers. Vorzugsweise ist das Formteil frei von Gelpartikeln. Die Gelpartikel werden mit einer so genannten Gelbestimmung ermittelt. Dabei wird das thermoplastische Polyurethan-Pulver in einen Standardstab (Dimension 80 mm x 10 mm x 4 mm) spritzgegossen. Der Stab wird mit der flachen Seite auf einen Leuchttisch gelegt. Die Gelpartikel sind mit dem bloßen Auge im Durchlicht als helle Flecken in der sonst homogenen Probe erkennbar. Zusätzlich werden die kreisförmigen Vertiefungen auf der glatten Oberfläche der Probekörper, die durch Gelpartikel nahe der Oberfläche erzeugt werden, gezählt. Um kleinere Fehler des Spritzgusses zu berücksichtigen, wird bei einer Summe der gezählten Gelpartikel X < 5 die Probe als frei ("frei von Gelpartikeln"), bei 5 < X < 15 als wenig, 15 < X <

30 als viel und X > 30 als sehr viel mit Gelen belastet, gewertet.

Ferner führen die thermoplastischen Polyurethan-Pulver durch Weiterverarbeitung bevorzugt zu Formteilen, welche weiterhin gute oder verbesserte mechanische Eigenschaften, insbesondere eine gute Bruchdehnung und ein gutes E-Modul, aufweisen. Die mechanischen Eigenschaften wie insbesondere die Bruchdehnung und das E-Modul/-Zugmodul, wird dabei vorzugsweise durch eine Zugprüfung in Anlehnung an die Prüfmethode DIN EN ISO 527 mit Probekörpern Typ 5A (DIN EN ISO 527-2, Dicke 2 mm) durchgeführt. Die Probekörper werden vor dem Versuch mindestens 24 h bei Normbedingungen gelagert. Die Zugversuche erfolgen bei 22 °C und 50 % relativer Feuchte, durchgeführt mit einer Universalprüfmaschine Z010 der Fa. Zwick mit einer Geschwindigkeit von 10 mm/ min. Der E-Modul wird zwischen 0,05 % und 0,25 % Dehnung ermittelt mittels Sekante. Die Probekörper können bspw. dadurch hergestellt werden, dass das thermoplastische Polyurethan-Pulver bei 80 °C im Trockenschrank für 4 h getrocknet, anschließend auf einem Mikroextruder (beispielsweise MC 15 HT (15 mL) der Firma Xplore) verarbeitet und mit dem dazugehörigen Spritzgußteil (beispielsweise ein Micro moulder IM 12) in die benötigte Form gebracht wird.

Zudem betrifft die Erfindung die Verwendung des erfindungsgemäßen Katalysators in einem Verfahren zur Herstellung eines thermoplastischen Polyurethan-Pulvers mittels Fällungspolymerisation, bevorzugt in dem erfindungsgemäßen Verfahren, zur Erhöhung des Molekulargewichts Mw des erhaltenen oder erhältlichen thermoplastischen Polyurethan-Pulvers. Das Molekulargewicht Mw wird dabei bevorzugt wie weiter oben beschrieben bestimmt. Der erfindungsgemäße Katalysator ist ebenfalls weiter oben sowie weiter unten beschrieben.

Außerdem betrifft die Erfindung die Verwendung des erfindungsgemäßen Katalysators in einem Verfahren zur Herstellung eines thermoplastischen Polyurethan-Pulvers mittels Fällungspolymerisation, bevorzugt in dem erfindungsgemäßen Verfahren, zur Verbesserung des Reaktionsverlaufs der Fällungspolymerisation. Eine Verbesserung des Reaktionsverlaufs liegt vorzugsweise darin, dass das Verfahren effizienter und verfahrenstechnisch-sicherer abläuft, was sich im Besonderen darin zeigt, dass die Hauptfällung des thermoplastischen Polyurethans deutlich früher erfolgt und/oder die Isocyanatkonzentration während des Reaktionsverlaufs sowie am Ende der Isocyanat-Zugabe möglichst gering ist.

Ausführungsformen:

Die Erfindung betrifft insbesondere folgende Ausfiihrungsformen:
Nach einer ersten Ausfiihrungsform betrifft die Erfindung ein Verfahren zur Herstellung eines thermoplastischen Polyurethan-Pulvers mittels Fällungspolymerisation, umfassend die Schritte:

i. Bereitstellung

A) eines Lösungsmittels;
B) wenigstens eines Polyols mit einer Molmasse zwischen 60 g/mol und 250 g/ mol;
C) wenigstens eines Diisocyanats;
D) eines Katalysators, wobei der Katalysator einen Titan-, Zink- oder Zirkonium-Übergangsmetallkomplex oder Mischungen von diesen umfasst oder daraus besteht;
E) optional eines Kettenregulators E1) und/oder eines Additivs E2);

ii. Umsetzung des Polyols B) mit dem Diisocyanat C) in dem Lösungsmittel A) bei einer Temperatur von höchstens 150 °C unter Anwesenheit des Katalysators D), gegebenenfalls des Kettenregulators E1) und/oder des Additivs E2), zu dem thermoplastischen Polyurethan, wobei das thermoplastische Polyurethan als Feststoff in dem Lösungsmittel A) ausfällt und eine Dispersion bildet;

iii. Abtrennung von dem Lösungsmittel A) und optionale Waschung des thermoplastischen Polyurethans mit einem Lösungsmittel; und

iv. Trocknung des thermoplastischen Polyurethans zu dem thermoplastischen Polyurethan-Pulver;

wobei das thermoplastische Polyurethan-Pulver

- ein Massenmittel der Molmasse Mw von ≥ 50000 g/mol;
- einen Allophanatgehalt von ≤ 0,25 mol-%, bezogen auf das gesamte thermoplastische Polyurethan-Pulver; und
- ein Verhältnis von Zentrifugenmittel der Molmasse Mz zu Massenmittel der Molmasse Mw von ≤ 4,0;

aufweist, wobei das Massenmittel der Molmasse Mw, der Allophanatgehalt sowie das Zentrifugenmittel der Molmasse Mz jeweils mit den in der Beschreibung dargelegten Methoden bestimmt werden.

Nach einer zweiten Ausfuhrungsform betrifft die Erfindung ein Verfahren nach der ersten Ausführungsfonn, dadurch gekennzeichnet, dass das Lösungsmittel A) ein Lösungsmittelgemisch ist, umfassend mindestens ein erstes aprotisches Lösungsmittel A1) mit einer relativen Permittivität $\varepsilon_r$ von 2 bis 20 und mindestens ein zweites aprotisch polares Lösungsmittel A2) mit einer relativen Permittivität $\varepsilon_r$ von wenigstens 24, wobei die relative Permittivität $\varepsilon_r$ jeweils bei 20 °C und 100 kHz gemessen wird.

Nach einer dritten Ausfuhrungsform betrifft die Erfindung ein Verfahren nach der zweiten Ausführungsform, dadurch gekennzeichnet, dass das erste aprotische Lösungsmittel A1) halogenierte Aromaten, Aromaten, Ketone, Ether, Ester und Carbonate oder Mischungen davon, insbesondere Chlorbenzol und/oder ortho-Dichlorbenzol; Cyclopentanon, Cyclohexanon; Heptan-4-on; Amylacetat; Methoxypropylacetat; Xylol; Benzol; Toluol; Ethylbenzol; Cumol; Acetophenon oder Mischungen davon, bevorzugt Chlorbenzol und/oder das zweite aprotisch polare Lösungsmittel A2) Dimethylsulfoxid, Dimethylformamid, *N*-Methyl-2-pyrrolidon, Tetramethylharnstoff, 1,3-Dimethyl-3,4,5,6-tetrahydro-2(1H)-pyrimidinion, 1,3 -Dimethyl-2-imidazolidinon, *N*-Ethyl-2-pyrrolidon, Benzonitril, Dimethylacetamid, g-Butyrolacton, Ethylencarbonat, 1,2-Propylencarbonat oder Mischungen davon, bevorzugt Dimethylsulfoxid; 1,2-Propylencarbonat; Ethylencarbonat; g-Butyrolacton umfasst oder daraus besteht.

Nach einer vierten Ausfuhrungsform betrifft die Erfindung ein Verfahren nach der zweiten oder dritten Ausführungsform, dadurch gekennzeichnet, dass das Verhältnis von dem ersten aprotischen Lösungsmittel A1) zu dem zweiten aprotisch polaren Lösungsmittel A2) 300:1 bis 1:9 beträgt, bevorzugt 200: 1 bis 1:1, weiter bevorzugt 100: 1 bis 8:2.

Nach einer fünften Ausfuhrungsform betrifft die Erfindung ein Verfahren nach der ersten Ausführungsform, dadurch gekennzeichnet, dass das Lösungsmittel A) Chlorbenzol, ortho-Dichlorbenzol; Xylol; Ethylbenzol; Toluol; Cumol; Butylacetat oder Amylacetat umfasst oder daraus besteht, bevorzugt Chlorbenzol.

Nach einer sechsten Ausfuhrungsform betrifft die Erfindung ein Verfahren nach einer der vorstehenden Ausführungsformen, dadurch gekennzeichnet, dass das Polyol B) Ethylenglykol, 1,3-Propandiol, 1,4-Butandiol, 1,5-Pentandiol, Neopentylglycol, 1,6-Hexandiol, 1,8-Octandiol, 1,10-Decandiol, 1,12-Dodecandiol oder Mischungen davon umfasst oder daraus besteht, wobei das Polyol B) vorzugsweise mindestens 50,0 Gew.-% 1,4-Butandiol, besonders bevorzugt mindestens 90,0 Gew.-% 1,4-Butandiol enthält, bezogen auf das Gesamtgewicht des Polyols B) und/oder das Diisocyanat C) 1,4-Butandiisocyanat, 1,5-Pentandiisocyanat, 1,6-Hexandiisocyanat, Isophorondiisocyanat, 1,1'-Methylenbis(4-isocyanatocyclohexan), Xylylene-Diisocyanat, insbesondere m-Xylylene-Diisocyanat oder Mischungen von diesen umfasst oder daraus besteht, wobei das Diisocyanat C) vorzugsweise mindestens 50,0 Gew.-% 1,5-Pentandiisocyanat oder 1,6-Hexandiisocyanat enthält, bezogen auf das Gesamtgewicht des Diisocyanats C).

Nach einer siebten Ausfuhrungsform betrifft die Erfindung ein Verfahren nach einer der vorstehenden Ausfiihrungsformen, dadurch gekennzeichnet, dass die Umsetzung in Schritt ii. bei einer Temperatur von 50 °C bis 150 °C, bevorzugt von 100 °C bis 145 °C, weiter bevorzugt von 120 °C bis 140 °C erfolgt und/oder bei einer Isocyanat-Kennzahl von 0,95 bis 1,1, bevorzugt 0,97 bis 1,02, weiter bevorzugt 0,98 bis 1,0 erfolgt.

Nach einer achten Ausfuhrungsform betrifft die Erfindung ein Verfahren nach einer der vorstehenden Ausführungsformen, dadurch gekennzeichnet, dass die in Schritt ii. gebildete Dispersion einen Feststoffgehalt von 5,0 bis 50,0 Gew.-% aufweist, bevorzugt von 15,0 bis 45,0 Gew.-%, weiter bevorzugt von 20,0 bis 40,0 Gew.-%, bestimmt mittels gravimetrischer Messung mit und ohne Lösungsmittel.

Nach einer neunten Ausfuhrungsform betrifft die Erfindung ein Verfahren nach einer der vorstehenden Ausfiihrungsformen, dadurch gekennzeichnet, dass das thermoplastische Polyurethan-Pulver

- ein Massenmittel der Molmasse Mw von 55000 bis 400000 g/mol, bevorzugt von 60000 bis 300000 g/mol, weiter bevorzugt von 65000 bis 200000 g/mol, besonders bevorzugt 70000 bis 175000 g/mol, ganz besonders bevorzugt 75000 bis 150000 g/mol;
- einen Allophanatgehalt von 0 bis 0,20 mol-%, bevorzugt von 0,001 bis 0,15 mol-%, besonders bevorzugt von 0,01 bis 0,10 mol-%, bezogen auf das gesamte thermoplastischen Polyurethan-Pulver; und/oder
- ein Verhältnis von Zentrifugenmittel der Molmasse Mz zu Massenmittel der Molmasse Mw von $\leq$ 3,5, bevorzugt von 1,9 bis 2,8;

aufweist.

Nach einer zehnten Ausfuhrungsform betrifft die Erfindung ein Verfahren nach einer der vorstehenden Ausfiihrungsformen, dadurch gekennzeichnet, dass der Titan-, Zink- und / oder Zirkonium-Übergangsmetallkomplex mindestens einen mehrzähnigen Liganden, insbesondere zumindest der Zirkonium-Übergangsmetallkomplex mindestens einen mehrzähnigen Liganden, aufweist, wobei der mehrzähnige Ligand bevorzugt mindestens ein zweizähniger Ligand, weiter bevorzugt Acetylaceton, ist.

Nach einer elften Ausfuhrungsform betrifft die Erfindung ein Verfahren nach einer der vorstehenden Ausführungsformen, dadurch gekennzeichnet, dass der Katalysator D) aus der Gruppe ausgewählt ist, umfassend oder bestehend aus Tetraisopropylorthotitanat, Bis(acetylacetonato)-titan-(IV)-oxid, Bis(acetylacetonato)-titan-diisopropoxid, Zink-(II)-acetat, Zink-(II)-acetylacetonat, Zirkonium-(IV)-acetylacetonat oder Mischungen von diesen, bevorzugt Bis(acetylacetonato)-titan-(IV)-oxid, Bis(acetylacetonato)-titan-diisopropoxid, Zink-(II)-acetat, Zink-(II)-acetylacetonat oder Mischungen von diesen, besonders bevorzugt Bis(acetylacetonato)-titan-diisopropoxid.

Nach einer zwölften Ausfuhrungsform betrifft die Erfindung ein thermoplastisches Polyurethan-Pulver, erhalten oder erhältlich nach einem Verfahren gemäß einer der Ausfiihrungsformen 1 bis 11.

Nach einer dreizehnten Ausfuhrungsform betrifft die Erfindung die Verwendung eines thermoplastischen Polyurethan-Pulvers gemäß der zwölften Ausführungsfonn in einem Extrusionsverfahren, Spritzgussverfahren, Pulversinterverfahren, Lösungsmittel- und/oder Schmelzeverfahren, insbesondere zur Herstellung von Formteilen und/oder Beschichtungen.

Nach einer vierzehnten Ausfuhrungsform betrifft die Erfindung ein Formteil, erhalten oder erhältlich durch die Verarbeitung eines thermoplastischen Polyurethan-Pulvers nach der zwölften Ausfuhrungsform.

Nach einer fünfzehnten Ausfuhrungsform betrifft die Erfindung die Verwendung eines Katalysators definiert wie in einer der Ausfiihrungsformen 1, 10 oder 11 in einem Verfahren zur Herstellung eines thermoplastischen Polyurethan-Pulvers mittels Fällungspolymerisation, bevorzugt in einem Verfahren gemäß einer der Ausfiihrungsformen 1 bis 11, zur Erhöhung des Molekulargewichts Mw des erhaltenen oder erhältlichen thermoplastischen Polyurethan-Pulvers.

## Beispiele

Die vorliegende Erfindung wird anhand der nachfolgenden Beispiele näher erläutert.

Messmethoden:

Folgende Messmethoden wurden verwendet:

GPC-Methode zur Bestimmung von Zahlenmittel der Molmasse Mn, Massenmittel der Molmasse Mw und Zentrifugenmittel der Molmasse Mz:

Bestimmung mittels Gelpermeationschromatographie (GPC). Dazu wurde die zu vermessende Probe in einer Lösung von 3 g Kaliumtrifluoracetat in 400 Kubikzentimeter Hexafluorisopropanol aufgelöst (Konzentration der Probe ca. 2 mg/Kubikzentimeter). Die jeweiligen GPCs wurden mit folgenden Komponenten bei einer Flussrate von 1 Kubikzentimeter/Minute gemessen:

Pumpe: HPLC-Pumpe 515 (Waters GmbH);

Detektor: Smartline RI-Detektor 2300 (Knauer Wissenschaftliche Geräte GmbH);

Säulen: 1 Vorsäule, 1000 Ä PSS PFG 7µm, 300 Ä PSS PFG 7µm, 100 Ä PSS; PFG 7µm in dieser Reihenfolge (PSS Polymer Standards Service GmbH);

Entgasung: Degasser PSS (PSS Polymer Standards Service GmbH);

Injektionsvolumen: 100 Mikroliter;

Temperatur: 23 °C - 25 °C;

Molmassen-Standard: Polymethylmethacrylat-Standard-Kit (PSS Polymer Standards Service GmbH).

Das Zahlenmittel der Molmasse ( $\overline{M}_n$ ) wurde aus den durch die Messung der Gelpermeationschromatographie erhaltenen Daten mit Hilfe der folgenden Gleichung errechnet:

$$\overline{M}_n = \frac{\sum_i n_i M_i}{\sum_i n_i}$$

in g/mol wobei:

$M_i$ die molare Masse der Polymere der Fraktion *i* ist, so dass $M_i < M_{i+1}$ für alle *i,* in g/mol ist,
$n_i$ die Stoffmenge des Polymers der Fraktion *i,* in mol ist.

Das Massenmittel der Molmasse ($\overline{M}_w$) wurde ebenfalls aus den durch die Messung der Gelpermeationschromatographie erhaltenen Daten mit Hilfe der folgenden Gleichung errechnet:

$$\overline{M}_w = \frac{\sum_i n_i M_i^2}{\sum_i n_i M_i}$$

in g/mol wobei:

$M_i$ die molare Masse der Polymere der Fraktion *i* ist, so dass $M_i < M_{i+1}$ für alle *i,* in g/mol ist,
$n_i$ die Stoffmenge des Polymers der Fraktion *i,* in mol ist.

Das Zentrifugenmittel der Molmasse ( $\overline{M}_z$ ) wurde aus den durch die Messung der Gelpermeationschromatographie erhaltenen Daten mit Hilfe der folgenden Gleichung errechnet:

$$\overline{M}_z = \frac{\sum_i n_i M_i^3}{\sum_i n_i M_i^2}$$

in g/mol wobei:

$M_i$ die molare Masse der Polymere der Fraktion *i* ist, so dass $M_i < M_{i+1}$ für alle *i,* in g/mol ist,
$n_i$ die Stoffmenge des Polymers der Fraktion *i,* in mol ist.

<u>Allophanatgehalt:</u>

Der Allophanatgehalt wurde mittels $^1$H-NMR bestimmt. Die Messungen wurden mit einem Bruker AV III HD 600 Spektrometer bei 600 MHz in DMSO-D6 bei 80 °C durchgeführt.
Folgende Peaks wurden ausgewertet:

| | | |
|---|---|---|
| U=C**H**$_2$-NH | 2.98 ppm | $CH_2$ bei Urethan |
| O=C**H**$_2$-OH | 3.43 ppm | $CH_2$ bei OH-Gruppen |
| N=N-**H** | 6.6 ppm | Urethan |
| A= N-**H** | 8.3-8.4 ppm | Allophanat |

Die aliphatische Allophanat Konzentration in mol-% wurde nach folgender Formel berechnet:

$$\text{Allophanat [mol-\%]} = 100\ \% * A/\ (A+N)$$

Die Kennzahl für den Umsatz ergibt sich aus der Formel:

$$KZ = 1/\ (1+O/U)$$

<u>Isocyanat-Titration:</u>

Durch Rücktitration von Dibutylamin mit 0,1 N Salzsäure nach Zugabe eines Aminüberschusses zu einer Isocyanatlösung unter Zuhilfenahme eines Metrohm, 751 GPD titrino 685 Dosimat und 728 Rührer.

**Materialien:**

Für die Komponenten A) bis E) wurden die folgenden Materialien eingesetzt:

<u>Lösungsmittel A):</u>

- Chlorbenzol (Einzeln oder im Gemisch als erstes aprotisches Lösungsmittel A1)) in Analysenqualität, bezogen von der Firma Azelis Deutschland GmbH, relative Permittivität: □$_r$ = 5,6 (siehe Literatur 1.) weiter unten)
- Dimethylsulfoxid (DMSO) 99,9 % (im Gemisch als zweites aprotisch polares Lösungsmittel A2)), bezogen von der

Firma Merck, relative Permittivität: $\varepsilon_r$ = 47,3 (siehe Literatur 2.) weiter unten)

Literatur: 1.) DK Handbook, Endress+Hauser Messtechnik GmbH&Co. (1999); 2.) Hunger et al J. Chem. Eng. Data 2010, 55, 5, 2055-2065.

Polyol B :

- 1,4-Butandiol (BDO) (Firma: Ashland), Reinheit: ≥ 99 % Gew.-%,

Diisocyanat C):

- 1,6-Hexamethylendiisocyanat (HDI) (Firma: Covestro AG), Reinheit: ≥ 99 % Gew.-%;

Katalysator D):

- Titantetraisopropoxid (bzw. Tetraisopropylorthotitanat; Ti $(OiPr)_4$) bezogen von der Firma Sigma-Aldrich, Reinheit: ≥ 97 Gew.-%;
- Bis(acetylacetonato)-titan-(IV)-oxid ($TiO(acac)_2$) bezogen von der Firma Sigma-Aldrich, Reinheit: ≥ 95 Gew.-%,
- Bis(acetylacetonato)-titan-diisopropoxid ($Ti(OiPr)_2(acac)_2$) bezogen von der Firma Sigma-Aldrich, Reinheit: ≥ 75% Gew.-% in Isopropanol;
- Zirkonium-(IV)-acetylacetonat ($Zr(acac)_4$) bezogen von der Firma Sigma-Aldrich, Reinheit: ≥ 97 Gew.-%,
- Zink-(II)-acetat ($Zn(OAc)_2$) bezogen von der Firma Sigma-Aldrich, Reinheit: ≥ 99 Gew.-%;
- Zink-(II)-acetylacetonat ($Zn(acac)_2$) bezogen von der Firma Sigma-Aldrich, Reinheit: ≥ 95 Gew.-%,

Weitere Katalysatoren:

- Dibutylzinnlaureat (DBTL) bezogen von der Firma Sigma-Aldrich, Reinheit: ≥ 95 Gew.-%;
- 1,4-Diazabicyclo[2.2.2]octan (DABCO) bezogen von der Firma Sigma-Aldrich, Reinheit: ≥ 99 Gew.-%.

Kettenregulator E1):

n-Octanol in Analysenqualität, bezogen von der Firma Arcos Organics, Reinheit: ≥ 99 % Gew.-%.

**Versuchsdurchführung und Ergebnisse:**

Versuchsreihe 1: Vergleich verschiedener Katalysatoren in einem Lösungsmittelgemisch

Es wurden 1000 mL Chlorbenzol, 50 mL DMSO, 201,8 g (2,24 mol) BDO, 2,86 g (22 mmol) n-Octanol, gegebenenfalls 40 mg Katalysator sowie 189,8 g (1,13 mol) HDI in einem 2L Reaktionsgefäß mit Thermometer, Rückflußkühler und mechanischen Rührer eingefüllt. Die Mischung wurde sekuriert, mit Stickstoff überschleiert und auf dem Ölbad auf Rückfluß erwärmt (bei ca 90 °C sprang die Reaktion an und erwärmte die Mischung). Nun wurden weitere 189,8 g (1,13 mol) HDI mit Tropftrichter unter Rühren so zügig zugegeben, dass die Mischung am Rückfluß gehalten wurde. Nach beendeter HDI-Zugabe wurde die Mischung weitere 5 h bei Rückfluß erhitzt. Dabei fiel das thermoplastische Polyurethan als weißes Pulver aus. Es wurde der Restisocyanatgehalt gemessen, mit Butanol neutralisiert und die Dispersion unter Rühren abgekühlt. Das Pulver wurde abfiltriert und der Rückstand auf der Nutsche einmal mit 250 mL Chlorbenzol nachgewaschen. Der Filterkuchen wurde anschließend in 250 mL Chlorbenzol aufgeschlämmt, für 30 min bei RT gerührt und filtriert. Der Vorgang wurde insgesamt 6-mal durchgeführt. Danach wurde der Filterkuchen bei 120 °C im Vakuum getrocknet.

Die Ergebnisse sind in Tabelle 1 zusammengefasst:

**Tabelle 1**

| Versuch | Katalysator | Mw [g/mol] | Mz/Mw | Allophanatgehalt [mol%] | Weiteres |
|---|---|---|---|---|---|
| 1a Nicht erfindungsgemäß | kein | 64114 | 1.8 | 0.1 | |
| 1b Nicht erfindungsgemäß | DBTL | 70870 | 1.9 | - * | |
| 1c | Ti $(OiPr)_4$ | 156210 | 2.6 | <0.1 | Produkt gelb |
| 1d | $TiO(acac)_2$ | 108503 | 1.9 | <0.1 | Produkt leicht gelblich |
| 1e | $Zr(acac)_4$ | 80815 | 1.9 | <0.1 | |
| 1f Nicht erfindungsgemäß | DABCO | 49809 | 1.9 | 0.1 | |
| 1g | $Zn(OAc)_2$ | 94454 | 2.5 | 0.1 | |
| 1h | $Zn(acac)_2$ | 117748 | 2.7 | 0.1 | |
| 1i | $Ti(OiPr)_2(acac)_2$ | 113882 | 2.1 | - * | |
| * - = kein Allophanat detektierbar. | | | | | |

Die erfindungsgemäßen Versuche zeigen deutlich, dass die Verwendung von erfindungsgemäßen Katalysatoren, d.h. die Titan-, Zink- und Zirkonium-Übergangsmetallkomplexe, die Molmasse der bei der Fällungspolymerisation erhaltenen oder erhältlichen thermoplastischen Polyurethan-Pulver erhöhen, wobei weiterhin geringe Allophanatgehalte und Mz/Mw-Verhältnisse erzielt werden. Im Besonderen zeigen sich Titan- und Zink-basierte Katalysatoren (Versuche 1c, 1d, 1e, 1g, 1h und 1i) als sehr effektiv hinsichtlich der Erhöhung der Molmasse. Ein gutes Verhältnis von effektiver Molmassenerhöhung und gleichzeitig keiner Verfärbung des thermoplastischen Polyurethan-Pulvers ergab insbesondere der bidendate Titan-Katalysator Titan-(IV)-bis(acetylacetonato)-di-(iso-propylat) aus Versuch 1i, der eine Erhöhung der Molmasse Mw, mit wenig Allophanaterzeugung und geringer Verfärbung des Produktes kombiniert.

Im Vergleich dazu zeigt sich, dass herkömmliche Katalysatoren wie der Amin-basierte Katalysator DABCO keine Erhöhung der Molmasse bewirken. Zwar erhöht auch der bekannte organische Zinn-basierte Katalysator DBTL im Vergleich zu Versuch 1a, wo kein Katalysator eingesetzt wird, die Molmassen, allerdings ist dieser Katalysator stark toxisch und gegenüber den erfindungsgemäßen Versuchen 1c, 1d, 1e, 1g, 1h und 1i weiterhin schlechter in Bezug auf die Erhöhung der Molmasse des thermoplastischen Polyurethan-Pulvers.

<u>Versuchsreihe 2</u>: Verwendung von Katalysatoren in einem Lösungsmittel

Es wurden 1200 mL Chlorbenzol, 139,7 g (0,775 mol) BDO, 130,45 g (1,10 mol) HDI und gegebenenfalls 15 mg Titan-(IV)-bis(acetylacetonato)-di-(iso-propylat) in einem 2L Reaktionsgefäß mit Thermometer, Rückflußkühler und mechanischen Rührer bei RT eingefüllt und die Mischung auf dem Ölbad bis zum Rückfluß erwärmt. Nun wurden 130,45 g (0,775 mol) HDI zügig mit Tropftrichter unter Rühren zugegeben, so dass die Mischung am Rückfluß siedete. Nach beendeter HDI Zugabe wurde weitere 5 h am Rückfluß erhitzt. Die Lösung wurde auf Restgehalt Isocyanat getestet und auf Raumtemperatur unter ständigem Rühren abgekühlt. Das thermoplastische Polyurethan fiel dabei als weißes Pulver aus. Die Mischung wurde abgekühlt, abfiltriert (Nutsche) und der Rückstand 2 mal mit 150 mL Chlorbenzol und 2 mal 150 ml Aceton nachgewaschen. Der weiße Feststoff wurde bei ca. 80 °C 24 h im Umluftofen getrocknet.

Die Ergebnisse sind in Tabelle 2 zusammengefasst:

**Tabelle 2**

| Versuch | Katalysator | Mw [g/mol] | Mz/Mw | Allophanatgehalt [mol%] |
|---|---|---|---|---|
| 2a | kein | 36771 | 1,9 | - * |
| 2b | $Ti(OiPr)_2(acac)_2$ | 105948 | 2,2 | < 0,1 |
| * - = kein Allophanat detektierbar. | | | | |

Es zeigt sich, dass auch bei der Verwendung von nur einem Lösungsmittel, die Molmasse bei gleichzeitig

geringem Allophanatgehalt und Mz/Mw Verhältnis ebenfalls deutlich erhöht werden kann, wenn ein erfindungsgemäßer Katalysator (siehe Versuch 2b im Vergleich zu 2a) eingesetzt wird.

Versuchsreihe 3: Reaktionsverlauf

Es wurden 1200 mL Chlorbenzol, 136,1 g (1,51 mol) BDO und 0,39 g (3 mmol) n-Octanol (sowie ggf 3 mg Katalysator Titan-(IV)-bis(acetylacetonato)-di-(iso-propylat)) in einem 2L Reaktionsgefäß mit Thermometer, Rückflußkühler und mechanischen Rührer eingefüllt und die Mischung auf dem Ölbad bis zum Rückfluß (ca 132 °C) erwärmt. Nun wurden 257,5 g (1,53 mol) HDI mit Tropftrichter unter Rühren *gleichmäßig* über eine Stunde zugegeben. Während der Zugabe (und noch 30 min danach) wurde aller 10 min eine Probe gezogen, die bereits zugegebene HDI Menge abgelesen und der Isocyanatgehalt bestimmt. Nach beendeter HDI Zugabe wurden weitere 12 h am Rückfluß erhitzt. Dabei wurde eine Isocyanatbestimmung nach ca. 5 h gemacht. Zum Schluß wurde die Lösung auf Restgehalt Isocyanat getestet, das Isocyanat mit Butanol neutralisiert und die Dispersion auf Raumtemperatur unter ständigem Rühren abgekühlt. Die Mischung wurde abfiltriert und der Rückstand 3 mal mit 200 mL Chlorbenzol nachgewaschen. Der weiße Feststoff wurde bei ca 80 °C 24 h im Umluftofen getrocknet.

Die Ergebnisse sind in den Tabellen 3 (ohne Katalysator) und 4 (mit Katalysator) zusammengefasst.

**Tabelle 3**

| | Zeit [min] | Isocyanatgehalt titriert [%] | Isocyanatgehalt berechnet [%] | Menge HDI zugegeben [%] | Menge Isocyanat-Umsatz [%] | Restmenge Isocyanat [%] |
|---|---|---|---|---|---|---|
| Start HDI Zugabe | 0 | 0 | 0 | 0 | 0 | 0 |
| | 10 | 0,19 | 1,26 | 16,6 | 14 | 2,6 |
| | 20 | 0,61 | 2,52 | 33,2 | 25 | 8,2 |
| | 30 | 0,94 | 3,8 | 48,6 | 27 | 21,6 |
| | 40 | 1,52 | 5,05 | 65,2 | 46 | 19,2 |
| Begin der Fällung | 50 | 1,71 | 6,3 | 81,8 | 59 | 22,8 |
| Ende HDI Zugabe | 60 | 2,06 | 7,6 | 100 | 73 | 27 |
| Starke Fällung | 70 | 0,9 | 7,6 | 100 | 88 | 12 |
| | 411 | 0,23 | 7,6 | 100 | 97 | 3 |
| | 880 | 0,2 | 7,6 | 100 | 97,4 | 2,6 |

**Tabelle 4**

| | Zeit [min] | Isocyanatgehalt titriert [%] | Isocyanatgehalt berechnet [%] | Menge HDI zugegeben [%] | Menge Isocyanat-Umsatz [%] | Restmenge Isocyanat [%] |
|---|---|---|---|---|---|---|
| Start HDI Zugabe | 0 | 0 | 0 | 0 | 0 | 0 |
| | 10 | 0,08 | 1,26 | 16,6 | 15,5 | 1,1 |
| | 20 | 0,1 | 2,52 | 33,2 | 29,5 | 3,7 |
| | 30 | 0,16 | 3,8 | 48,6 | 46,5 | 2,1 |
| | 40 | 0,08 | 5,05 | 65,2 | 64,2 | 1 |
| Starke Fällung | 50 | 0,36 | 6,3 | 81,8 | 77,1 | 4,7 |

(fortgesetzt)

| | Zeit [min] | Isocyanatgehalt titriert [%] | Isocyanatgehalt berechnet [%] | Menge HDI zugegeben [%] | Menge Isocyanat-Umsatz [%] | Restmenge Isocyanat [%] |
|---|---|---|---|---|---|---|
| Ende HDI Zugabe | 60 | - * | 7,6 | 100 | - * | - * |
| | 73 | 0,72 | 7,6 | 100 | 90,5 | 9,5 |
| | 86 | 0,57 | 7,6 | 100 | 92,5 | 7,5 |
| | 93 | 0,59 | 7,6 | 100 | 92 | 8 |
| | 106 | 0,49 | 7,6 | 100 | 93,5 | 6,5 |
| | 415 | 0,32 | 7,6 | 100 | 96 | 4 |
| | 810 | 0,28 | 7,6 | 100 | 96,3 | 3,7 |
| * Probenentnahme war zu diesem Zeitpunkt nicht möglich, da die Lösung durch die Fällung noch zu stark siedete. | | | | | | |

Insgesamt war der Reaktionsverlauf der nicht-katalysierten und katalysierten Reaktion ähnlich. Die Fällung des Polymers erfolgte bei etwa gleichem Umsatz an HDI und die Isocyanat-Endkonzentrationen waren ebenfalls vergleichbar.

Große Unterschiede gab es hingegen beim Fällungszeitpunkt des thermoplastischen Polyurethans im Hinblick auf die HDI-Zugabemenge und auf die Isocyanatkonzentration während der HDI-Dosierung. Im Falle der nicht-katalysierten Reaktion fand die Hauptfällung ca. 10 min nach der vollständigen HDI-Zugabe statt, während bei der katalysierten Reaktion die Hauptfällung des thermoplastischen Polyurethans etwa 10 min vor Beendigung der HDI Zugabe zu beobachten war. Die Isocyanatkonzentration in der Reaktionslösung der nicht-katalysierten Synthese erreichte bei beendeter HDI-Zugabe den höchsten Wert mit ca. 2 Gew.-%, was etwa 27 % unverbrauchtem Isocyanat entspricht. Dies stellt über ein Viertel der gesamten Reaktionsenergie als latente Energiemenge und damit ein beachtliches Risiko in der industriellen Produktion im Falle einer Störung z.B. der Kühlung dar.

Im Gegensatz dazu wurde bei der katalysierten Reaktion keine Isocyanatkonzentration über 1 Gew.-% während des gesamten Reaktionsverlaufes gemessen. Die höchste Menge an freiem Isocyanat wurde auch bei der katalysierten Reaktion mit dem Ende der HDI Zugabe bestimmt und betrug weniger als 10 % des eingesetzten Gesamtisocyanates. Bei der katalysierten Reaktion war somit die höchste gemessene Isocyanatmenge ebenfalls am Ende der HDI Zugabe nur etwa ein Drittel im Vergleich zur nicht-katalysierten Reaktion.

## Patentansprüche

1. Verfahren zur Herstellung eines thermoplastischen Polyurethan-Pulvers mittels Fällungspolymerisation, umfassend die Schritte:

   i. Bereitstellung

      A) eines Lösungsmittels;
      B) wenigstens eines Polyols mit einer Molmasse zwischen 60 g/mol und 250 g/ mol;
      C) wenigstens eines Diisocyanats;
      D) eines Katalysators, wobei der Katalysator einen Titan-, Zink- oder Zirkonium-Übergangsmetallkomplex oder Mischungen von diesen umfasst oder daraus besteht;
      E) optional eines Kettenregulators E1) und/oder eines Additivs E2);

   ii. Umsetzung des Polyols B) mit dem Diisocyanat C) in dem Lösungsmittel A) bei einer Temperatur von höchstens 150 °C unter Anwesenheit des Katalysators D), gegebenenfalls des Kettenregulators E1) und/oder des Additivs E2), zu dem thermoplastischen Polyurethan, wobei das thermoplastische Polyurethan als Feststoff in dem Lösungsmittel A) ausfällt und eine Dispersion bildet;
   iii. Abtrennung von dem Lösungsmittel A) und optionale Waschung des thermoplastischen Polyurethans mit einem Lösungsmittel; und
   iv. Trocknung des thermoplastischen Polyurethans zu dem thermoplastischen Polyurethan-Pulver;

wobei das thermoplastische Polyurethan-Pulver

- ein Massenmittel der Molmasse Mw von ≥ 50000 g/mol;
- einen Allophanatgehalt von ≤ 0,25 mol-%, bezogen auf das gesamte thermoplastische Polyurethan-Pulver; und
- ein Verhältnis von Zentrifugenmittel der Molmasse Mz zu Massenmittel der Molmasse Mw von ≤ 4,0;

aufweist, wobei das Massenmittel der Molmasse Mw, der Allophanatgehalt sowie das Zentrifugenmittel der Molmasse Mz jeweils mit den in der Beschreibung dargelegten Methoden bestimmt werden.

**2.** Verfahren nach Anspruch 1, **dadurch gekennzeichnet, dass** das Lösungsmittel A) ein Lösungsmittelgemisch ist, umfassend mindestens ein erstes aprotisches Lösungsmittel A1) mit einer relativen Permittivität $\varepsilon_r$ von 2 bis 20 und mindestens ein zweites aprotisch polares Lösungsmittel A2) mit einer relativen Permittivität $\varepsilon_r$ von wenigstens 24, wobei die relative Permittivität $\varepsilon_r$ jeweils bei 20 °C und 100 kHz gemessen wird.

**3.** Verfahren nach Anspruch 2, **dadurch gekennzeichnet, dass** das erste aprotische Lösungsmittel A1) halogenierte Aromaten, Aromaten, Ketone, Ether, Ester und Carbonate oder Mischungen davon, insbesondere Chlorbenzol und/oder ortho-Dichlorbenzol; Cyclopentanon, Cyclohexanon; Heptan-4-on; Amylacetat; Methoxypropylacetat; Xylol; Benzol; Toluol; Ethylbenzol; Cumol; Acetophenon oder Mischungen davon, bevorzugt Chlorbenzol und/oder das zweite aprotisch polare Lösungsmittel A2) Dimethylsulfoxid, Dimethylformamid, N-Methyl-2-pyrrolidon, Tetramethylharnstoff, 1,3-Dimethyl-3,4,5,6-tetrahydro-2(1H)-pyrimidinion, 1,3-Dimethyl-2-imidazolidinon, N-Ethyl-2-pyrrolidon, Benzonitril, Dimethylacetamid, g-Butyrolacton, Ethylencarbonat, 1,2-Propylencarbonat oder Mischungen davon, bevorzugt Dimethylsulfoxid; 1,2-Propylencarbonat; Ethylencarbonat; g-Butyrolacton umfasst oder daraus besteht.

**4.** Verfahren nach Anspruch 2 oder 3, **dadurch gekennzeichnet, dass** das Verhältnis von dem ersten aprotischen Lösungsmittel A1) zu dem zweiten aprotisch polaren Lösungsmittel A2) 300:1 bis 1:9 beträgt, bevorzugt 200:1 bis 1:1, weiter bevorzugt 100: 1 bis 8:2.

**5.** Verfahren nach Anspruch 1, **dadurch gekennzeichnet, dass** das Lösungsmittel A) Chlorbenzol, ortho-Dichlorbenzol; Xylol; Ethylbenzol; Toluol; Cumol; Butylacetat oder Amylacetat umfasst oder daraus besteht, bevorzugt Chlorbenzol.

**6.** Verfahren nach einem der vorstehenden Ansprüche, **dadurch gekennzeichnet, dass** das Polyol B) Ethylenglykol, 1,3-Propandiol, 1,4-Butandiol, 1,5-Pentandiol, Neopentylglycol, 1,6-Hexandiol, 1,8-Octandiol, 1,10-Decandiol, 1,12-Dodecandiol oder Mischungen davon umfasst oder daraus besteht, wobei das Polyol B) vorzugsweise mindestens 50,0 Gew.-% 1,4-Butandiol, besonders bevorzugt mindestens 90,0 Gew.-% 1,4-Butandiol enthält, bezogen auf das Gesamtgewicht des Polyols B) und/oder das Diisocyanat C) 1,4-Butandiisocyanat, 1,5-Pentandiisocyanat, 1,6-Hexandiisocyanat, Isophorondiisocyanat, 1,1'-Methylenbis(4-isocyanatocyclohexan), Xylylene-Diisocyanat, insbesondere m-Xylylene-Diisocyanat oder Mischungen von diesen umfasst oder daraus besteht, wobei das Diisocyanat C) vorzugsweise mindestens 50,0 Gew.-% 1,5-Pentandiisocyanat oder 1,6-Hexandiisocyanat enthält, bezogen auf das Gesamtgewicht des Diisocyanats C).

**7.** Verfahren nach einem der vorstehenden Ansprüche, **dadurch gekennzeichnet, dass** die Umsetzung in Schritt ii. bei einer Temperatur von 50 °C bis 150 °C, bevorzugt von 100 °C bis 145 °C, weiter bevorzugt von 120 °C bis 140 °C erfolgt und/oder bei einer Isocyanat-Kennzahl von 0,95 bis 1,1, bevorzugt 0,97 bis 1,02, weiter bevorzugt 0,98 bis 1,0 erfolgt.

**8.** Verfahren nach einem der vorstehenden Ansprüche, **dadurch gekennzeichnet, dass** die in Schritt ii. gebildete Dispersion einen Feststoffgehalt von 5,0 bis 50,0 Gew.-% aufweist, bevorzugt von 15,0 bis 45,0 Gew.-%, weiter bevorzugt von 20,0 bis 40,0 Gew.-%, bestimmt mittels gravimetrischer Messung mit und ohne Lösungsmittel.

**9.** Verfahren nach einem der vorstehenden Ansprüche, **dadurch gekennzeichnet, dass** das thermoplastische Polyurethan-Pulver

- ein Massenmittel der Molmasse Mw von 55000 bis 400000 g/mol, bevorzugt von 60000 bis 300000 g/mol, weiter bevorzugt von 65000 bis 200000 g/mol, besonders bevorzugt 70000 bis 175000 g/mol, ganz besonders bevorzugt 75000 bis 150000 g/mol;

- einen Allophanatgehalt von 0 bis 0,20 mol-%, bevorzugt von 0,001 bis 0,15 mol-%, besonders bevorzugt von 0,01 bis 0,10 mol-%, bezogen auf das gesamte thermoplastischen Polyurethan-Pulver; und/oder
- ein Verhältnis von Zentrifugenmittel der Molmasse Mz zu Massenmittel der Molmasse Mw von ≤ 3,5, bevorzugt von 1,9 bis 2,8;

aufweist.

**10.** Verfahren nach einem der vorstehenden Ansprüche, **dadurch gekennzeichnet, dass** der Titan-, Zink- und / oder Zirkonium-Übergangsmetallkomplex mindestens einen mehrzähnigen Liganden aufweist, wobei der mehrzähnige Ligand bevorzugt mindestens ein zweizähniger Ligand, weiter bevorzugt Acetylaceton, ist.

**11.** Verfahren nach einem der vorstehenden Ansprüche, **dadurch gekennzeichnet, dass** der Katalysator D) aus der Gruppe ausgewählt ist, umfassend oder bestehend aus Tetraisopropylorthotitanat, Bis(acetylacetonato)-titan-(IV)-oxid, Bis(acetylacetonato)-titan-diisopropoxid, Zink-(II)-acetat, Zink-(II)-acetylacetonat, Zirkonium-(IV)-acetylacetonat oder Mischungen von diesen, bevorzugt Bis(acetylacetonato)-titan-(IV)-oxid, Bis(acetylacetonato)-titan-diisopropoxid, Zink-(II)-acetat, Zink-(II)-acetylacetonat oder Mischungen von diesen, besonders bevorzugt Bis(acetylacetonato)-titan-diisopropoxid.

**12.** Thermoplastisches Polyurethan-Pulver, erhalten oder erhältlich nach einem Verfahren gemäß einem der Ansprüche 1 bis 11.

**13.** Verwendung eines thermoplastischen Polyurethan-Pulvers gemäß Anspruch 12 in einem Extrusionsverfahren, Spritzgussverfahren, Pulversinterverfahren, Lösungsmittel- und/oder Schmelzeverfahren, insbesondere zur Herstellung von Formteilen und/oder Beschichtungen.

**14.** Formteil, erhalten oder erhältlich durch die Verarbeitung eines thermoplastischen Polyurethan-Pulvers gemäß Anspruch 12.

**15.** Verwendung eines Katalysators definiert wie in einem der Ansprüche 1, 10 oder 11 in einem Verfahren zur Herstellung eines thermoplastischen Polyurethan-Pulvers mittels Fällungspolymerisation, bevorzugt in einem Verfahren gemäß einem der Ansprüche 1 bis 11, zur Erhöhung des Molekulargewichts Mw des erhaltenen oder erhältlichen thermoplastischen Polyurethan-Pulvers.

Europäisches Patentamt
European Patent Office
Office européen des brevets

# EUROPÄISCHER RECHERCHENBERICHT

Nummer der Anmeldung
EP 24 21 0192

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | DE 728 981 C (IG FARBENINDUSTRIE AG) 7. Dezember 1942 (1942-12-07) * das ganze Dokument * ----- | 1-15 | INV. C08G18/08 C08G18/22 C08G18/28 C08G18/32 C08G18/73 |
| A | US 2 511 544 A (HEINRICH RINKE ET AL) 13. Juni 1950 (1950-06-13) * das ganze Dokument * ----- | 1-15 | |
| A | WO 2022/128172 A1 (COVESTRO DEUTSCHLAND AG [DE]) 23. Juni 2022 (2022-06-23) * Seite 14, Zeile 24 - Seite 15, Zeile 33 * ----- | 1-15 | |
| | | | RECHERCHIERTE SACHGEBIETE (IPC) |
| | | | C08G |

Der vorliegende Recherchenbericht wurde für alle Patentansprüche erstellt

1

| Recherchenort | Abschlußdatum der Recherche | Prüfer |
|---|---|---|
| München | 28. März 2025 | Sütterlin, Martin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 24 21 0192

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-03-2025

| Im Recherchenbericht angeführtes Patentdokument | Datum der Veröffentlichung | Mitglied(er) der Patentfamilie | Datum der Veröffentlichung |
|---|---|---|---|
| DE 728981 C | 07-12-1942 | KEINE | |
| US 2511544 A | 13-06-1950 | KEINE | |
| WO 2022128172 A1 | 23-06-2022 | EP 4015551 A1 | 22-06-2022 |
| | | WO 2022128172 A1 | 23-06-2022 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 728981 C
- WO 2021122279 A
- EP 3491066 A1
- EP 3512687 B1
- EP 0911142 B1

### In der Beschreibung aufgeführte Nicht-Patentliteratur

- **O. BAYER**. *Angew. Chem.*, 1947, vol. 59 (9), 257-288
- *B.I.O.S. Final Report No. 1472* (22), 47-48
- *CHEMICAL ABSTRACTS*, 31570-04-4
- *CHEMICAL ABSTRACTS*, 237-249-1
- *CHEMICAL ABSTRACTS*, 26741-53-7
- *CHEMICAL ABSTRACTS*, 603-35-0
- *CHEMICAL ABSTRACTS*, 80693-00-1
- *CHEMICAL ABSTRACTS*, 126050-54-2
- *CHEMICAL ABSTRACTS*, 6683-19-8
- *CHEMICAL ABSTRACTS*, 85-60-9
- *CHEMICAL ABSTRACTS*, 23128-74
- *CHEMICAL ABSTRACTS*, 36443-68-2
- *CHEMICAL ABSTRACTS*, 123-28-4
- *CHEMICAL ABSTRACTS*, 10595-72-9
- *CHEMICAL ABSTRACTS*, 29598-76-3
- *CHEMICAL ABSTRACTS*, 41484-35-9
- *CHEMICAL ABSTRACTS*, 16545-54-3
- *CHEMICAL ABSTRACTS*, 2500-88-1
- *CHEMICAL ABSTRACTS*, 96-69-5
- *CHEMICAL ABSTRACTS*, 90-66-4
- **HUNGER et al.** *J. Chem. Eng. Data*, 2010, vol. 55 (5), 2055-2065